(19) Europäisches Patentamt
European Patent Office
Office européen des brevets

(11) EP 1 605 015 B1

(12) **EUROPEAN PATENT SPECIFICATION**

(45) Date of publication and mention of the grant of the patent:
**25.02.2009 Bulletin 2009/09**

(21) Application number: **04720168.6**

(22) Date of filing: **12.03.2004**

(51) Int Cl.:
***C08J 3/24*** *(2006.01)* ***C08L 23/16*** *(2006.01)*

(86) International application number:
**PCT/JP2004/003267**

(87) International publication number:
**WO 2004/083299 (30.09.2004 Gazette 2004/40)**

(54) **PELLET COMPRISING ETHYLENE-a-OLEFIN-NON-CONJUGATED POLYENE COPOLYMER, METHOD FOR PRODUCING THERMOPLASTIC ELASTOMER AND METHOD FOR PRODUCING PELLET COMPRISING ETHYLENE-a-OLEFIN-NON-CONJUGATED POLYENE COPOLYMER**

COPOLYMER AUS ETHYLEN, A-OLEFIN UND NICHT KONJUGIERTEM POLYEN ENTHALTENDES PELLET, VERFAHREN ZUR HERSTELLUNG VON THERMOPLASTISCHEM ELASTOMER UND VERFAHREN ZUR HERSTELLUNG VON COPOLYMER AUS ETHYLEN, A-OLEFIN UND NICHT KONJUGIERTEM POLYEN ENTHALTENDEM PELLET

PASTILLE RENFERMANT UN COPOLYMERE POLYENE ETHYLENE (A)-OLEFINE NON CONJUGUE, PROCEDE DE PRODUCTION D'UN ELASTOMERE THERMOPLASTIQUE ET PROCEDE DE PRODUCTION DE LADITE PASTILLE

(84) Designated Contracting States:
**FR NL**

(30) Priority: **18.03.2003 JP 2003074630**

(43) Date of publication of application:
**14.12.2005 Bulletin 2005/50**

(73) Proprietor: **Mitsui Chemicals, Inc.**
**Tokyo 105-7117 (JP)**

(72) Inventors:
- **HAKUTA, Takashi,**
  **c/o Mitsui Chemicals, Inc.**
  **Ichihara-shi, Chiba 299-0108 (JP)**
- **KIKUCHI, Yoshiharu,**
  **c/o Mitsui Chemicals, Inc.**
  **Ichihara-shi, Chiba 299-0108 (JP)**
- **KAWASAKI, Masaaki,**
  **c/o Mitsui Chemicals, Inc.**
  **Ichihara-shi, Chiba 299-0108 (JP)**

(74) Representative: **Simons, Amanda Louise**
**J.A. Kemp & Co.,**
**14 South Square,**
**Gray's Inn**
**London WC1R 5JJ (GB)**

(56) References cited:
**EP-A- 0 837 098** **EP-A- 0 842 957**
**EP-A- 1 065 240** **EP-A- 1 065 241**
**WO-A-02/38626** **JP-A- 6 179 723**
**JP-A- 8 337 619** **JP-A- 9 087 331**
**JP-A- 9 124 859** **JP-A- 01 054 010**
**JP-A- 11 035 635** **JP-B2- 60 036 164**
**US-A- 4 588 794**

Remarks:
The file contains technical information submitted after the application was filed and not included in this specification

EP 1 605 015 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for preparation of a thermoplastic elastomer from pellets comprising an ethylene/α-olefin/specific non-conjugated polyene copolymer and a plasticizer. More specifically, the invention relates to a process for preparation of a thermoplastic elastomer using pellet which do not cause blocking, have high crosslinking reactivity when used as a crosslinked rubber or as a resin modifier of crosslinked type, and are suitably used especially in a thermoplastic elastomer; and to a process for preparation of the pellet.

Ethylene/α-olefin copolymer rubbers such as EPR and EPDM do not have an unsaturated bond in the main chain of their molecular structures and thus have excellent resistance to heat and weather as compared with commonly used diene rubbers. Therefore, they are widely used in applications such as a resin modifier of crosslinked type, a resin modifier of non-crosslinked type, an automobile part, a wire material, construction and structural materials, an industrial material part.

Among the above-mentioned applications, a process for preparation of a crosslinked rubber takes emphasis on the process of kneading. Upon preparing a non-crosslinked, blended rubber or a crosslinked rubber, it is necessary to knead a crude rubber with subsidiary materials such as carbon black or a filler, or with a plasticizer such as oil, and the dispersibility of the subsidiary materials resulting from this kneading imposes enormous affect on the properties of the rubber and the productization rate (the yield of the product). For example, when the dispersibility of the filler is poor and unfavorably inhomogeneous in the process of kneading, the subsequent process for crosslinking may cause problems or may result in defective products after productization. In order to improve such poor dispersion, the time for kneading may be extended to improve the dispersibility; however, in this case, the throughput of the blended rubber per unit time is lowered, thereby leading to a raise in production costs. Therefore, a technique which promises good dispersibility and which is also capable of increasing the rubber throughput per unit time is desired.

As a means to solve this problem, for example, known is a method of preparing an ethylene/propylene rubber bale having excellent kneadability by molding the polymeric rubber in the crumb shape under specific conditions (see, for example, JP-A No. 61-61810). However, when additional testing was carried out with respect to the corresponding invention, even though the time for kneading could be certainly reduced, the result is still unsatisfactory.

In addition, since a crude rubber bale necessitates a process for breaking and plasticizing the bale (mastication), the preliminarily broken pellets would be able to reduce the time for kneading. However, in order to obtain a pellet which does not cause blocking, a raw material rubber having a high degree of crystallinity is to be used, and this is associated with problems such as obtaining a rubber having poor cold resistance. Thus, a pellet of a raw material rubber having a low degree of crystallinity is desired.

Meanwhile, Pap Meet Rubber Div Am Chem Soc, Vol.157, No.16, p.36 (2000) discloses a method of reducing the time for kneading by means of the continuous kneading technique of SBR. In this technique, although the rubber throughput per unit time is improved significantly, there is needed a pellet which does not cause blocking, or a powder.

However, in order to obtain a pellet which does not cause blocking, a raw material rubber having a high degree of crystallinity is to be used, and this is associated with problems such as obtaining a rubber having poor cold resistance.

In the meantime, EPR and EPDM are being used not only as crosslinked rubbers, but also as impact resistance modifiers (of non-crosslinked type) for polypropylene resins, or as the modifiers (of crosslinked type) for a thermoplastic elastomer, AS resins, PS resins or the like. EPR and EPDM will be improved in low temperature properties by lowering their ethylene contents and are excellent in the performance of improving the impact resistance of a polypropylene resin, a thermoplastic elastomer, an AS resin and a PS resin at low temperatures.

However, it is difficult to handle such EPR and EPDM having low ethylene contents (low degree of crystallinity) in the pellet form, and they are being handled in the bale form. Thus, it is difficult to handle EPR and EPDM in the bale form using the generally used resin processing equipment. Here, the so-called EPR or EPDM having a low ethylene contents refers to EPR or EPDM having an ethylene content of 50 to 75 mol. Conventionally, in the case of utilizing the EPR or EPDM having low ethylene content, a polypropylene resin in the pellet form is blended with EPR or EPDM in the bale form, and a masterbatch pellet having a high content of a polypropylene resin is prepared therefrom for use. Such mixing of EPR or EPDM in the bale form with a polypropylene resin in the pellet form faces a problem of increased production costs. Further, the use of a pellet comprising a resin becomes problematic when the preparation of a product with a lower resin content is desired, because there is no degree of freedom given in freely changing the resin content in a product.

Meanwhile, in the preparation of a rubber product with addition of a plasticizer, there may be used a method of using an oil-containing rubber in which a certain amount of a plasticizer has been preliminarily added to the rubber, or a method of supplying a plasticizer via a separate port different from that for the rubber upon molding the rubber. But since the rubber must be handled in the bale form in both cases, it is difficult to supply the rubber continuously to an extruder, and the productivity is low. Further, separate supplying of the plasticizer is also associated with difficulties in the aspects of productivity or stable dispersion of the plasticizer.

Therefore, if a rubber pellet preliminarily contains a plasticizer and also has a low degree of crystallinity while

not causing blocking, the productivity would be improved significantly.

Moreover, when such the rubber pellet would be used as a crosslinked rubber or as a resin modifier of crosslinked type, its excellent crosslinking reactivity would be desirable.

EP-A-0842957 is concerned with providing improved ethylene-alpha-olefin- non-conjugated polyene copolymers.

EP-A-0837098 is concerned with providing compositions especially for large size foamed-in-place applications based on ethylene-alpha-olefin-non-conjugated polyene copolymers.

EP1065240 is concerned with providing improved rubber modifiers based on ethylene-alpha-olefin copolymers rubbers.

EP-A-1065241 is concerned with providing improved thermoplastic elastomers using crystalline polyolefins and ethylene-alpha-olefin non-conjugated polyene rubbers involving for instance mixing the components in a Banbury mixer and cutting the produced sheets into pellets.

US-A-1588794 is concerned in the Sulfur-curable pelletised compositions which do not agglomerate obtained by compounding ethylene-alpha-olefin non-conjugated polyene copolymers with curatives and optionally with softeners or plasticisers. Compounding is effected by the use of open rolls.

The invention has been made to solve the problems associated with the prior art as described above. Thus, it is an object of the invention to provide a pellet comprising an ethylene/α-olefin copolymer and a plasticizer, characterized in that when used as a crosslinked rubber, the kneading time can be reduced, and a rubber having excellent crosslinking reactivity as well as excellent cold resistance can be obtained, and that when used as a raw material for a thermoplastic elastomer, the pellet does not cause blocking, continuous production of the thermoplastic elastomer by means of an extruder or the like is possible, and the resulting thermoplastic elastomer has excellent properties; a process for preparation of the thermoplastic elastomer using the pellet; and a process for preparing the pellet easily at low costs.

The process and the pellets of the oil-extended copolymer of the present invention are defined in claims 1 to 15. In general the pellets comprise

(A) 100 parts by weight of an ethylene/α-olefin/non-conjugated polyene copolymer containing a constitutional unit derived from non-conjugated polyene represented by Formula [I] or [II], and having a branching index of 0.3 to 0.95,
(B) 1 to 150 parts by weight of a plasticizer relative to 100 parts by weight of (A) above, and
(C) 0 to 30 parts by weight of a thermoplastic resin relative to 100 parts by weight of (A) above.

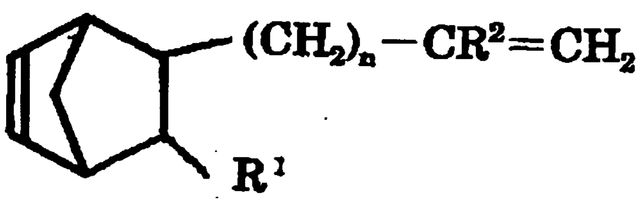 ... [I]

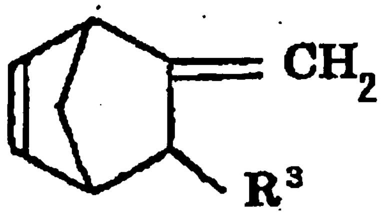 ... [II]

In Formula [I], n is an integer of 0 to 10, $R^1$ is a hydrogen atom or an alkyl group having 1 to 10 carbon atoms, and $R^2$ is a hydrogen atom or an alkyl group having 1 to 5 carbon atoms. In Formula [II], $R^3$ is a hydrogen atom or an alkyl group having 1 to 10 carbon atoms.

According to the invention, in a preferred embodiment the pellets contain substantially no thermoplastic resin (C).

Also, according to the invention, it is preferable that the ethylene/α-olefin/non-conjugated polyene copolymer (A) satisfies the following conditions (i) and (ii):

(i) the intrinsic viscosity [η] (in decalin at 135°C) is from 1 to 10 dl/g; and
(ii) the molar ratio of ethylene/α-olefin is from 50/50 to 98/2.

According to the invention, it is more preferable that the pellets satisfy the following conditions (iii) and (iv) :

(iii) -30([η] - 2) ≤ 3 x (ethylene/α-olefin ratio) is satisfied; and

(iv) [η] 1 ≥ 0.05 x (blending ratio for the plasticizer (% by weight)) is satisfied [wherein the blending ratio for the plasticizer (% by weight) denotes the ratio of the weight of the plasticizer (B) relative to the sum of the weight of the ethylene/α-olefin/non-conjugated polyene copolymer (A) and the weight of the plasticizer (B) in the pellet of the invention, as expressed in percentage].

The process for preparation of the thermoplastic elastomer of the invention relies on dynamic crosslinking of the above-mentioned pellets. It is preferable to carry out dynamic crosslinking by continuously supplying the above-mentioned pellets to a melt kneading machine, and it is more preferable that the melt kneading machine is an extruder.

The preparation of the pellet of the invention involves introducing a rubber composition comprising 100 parts by weight of an ethylene/α-olefin/non-conjugated polyene copolymer (A) containing a constitutional unit derived from non-conjugated polyene represented by the above-described Formula [I] or [II], 0 to 10 parts by weight of an organic solvent (D) and 1 to 150 parts by weight of a plasticizer (B), with a thermoplastic resin (C3), if needed, is introduced into a multivented extruder via the feed section of the extruder, and also if necessary, a thermoplastic resin (C4) is introduced into the above-mentioned extruder via another feed section in the presence of an inert gas; and then the rubber composition is kneaded with thermoplastic resin (C4), if needed, and subjected to solvent removal, if needed.

Fig. 1 is a schematic diagram of a twin screw triple-vented extruder, which is an exemplary multivented extruder used in the process for preparation of the pellet of the ethylene copolymer rubber composition according to the invention. In Fig. 1, symbol **1** represents the twin screw triple-vented extruder, symbol **2** represents the feed section for the ethylene/α-olefin copolymer rubber, symbol **3** represents the feed section for the thermoplastic resin, symbol **4** represents the vent holes, and symbol **5** represents the outlet.

BEST MODE FOR CARRYING OUT THE INVENTION

First, the respective components used in the invention will be illustrated.

[Ethylene/α-olefin/non-conjugated polyene copolymer (A)]

The ethylene/α-olefin/non-conjugated polyene random copolymer (A) used preferably in the invention is a random copolymer of ethylene, α-olefin having 3 to 20 carbon atoms and non-conjugated polyene.

Specific examples of such α-olefin having 3 to 20 carbon atoms include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene, 12-ethyl-1-tetradecene. Among these, α-olefin having 3 to 10 carbon atoms is preferred, and particularly propylene, 1-butene, 1-hexene, 1-octene are preferred.

Such α-olefin is used alone or in combination of two or more species.

The non-conjugated polyene used in the invention is a norbornene compound represented by the following Formula [I] or [II]:

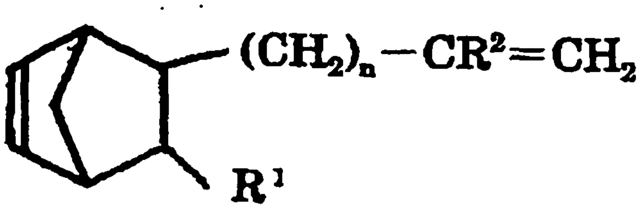

... [I]

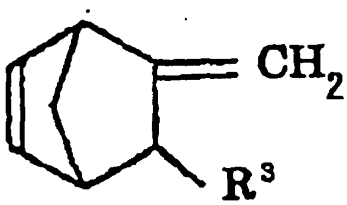

... [II]

In Formula [I], n is an integer of 0 to 10, and $R^1$ is a hydrogen atom or an alkyl group having 1 to 10 carbon atoms.

The alkyl group having 1 to 10 carbon atoms for $R^1$ may be specifically exemplified by a methyl group, an ethyl group, a propyl group, an isopropyl group, an n-butyl group, an isobutyl group, a sec-butyl group, a t-butyl group, an n-pentyl group, an isopentyl group, a t-pentyl group, a neopentyl group, a hexyl group, an isohexyl group, a heptyl group, an octyl group, a nonyl group, a decyl group.

$R^2$ is a hydrogen atom or an alkyl group having 1 to 5 carbon atoms.

Specific examples of the alkyl group having 1 to 5 carbon atoms for $R^2$ may include the alkyl groups having 1 to 5 carbon atoms among the above-mentioned specific examples for $R^1$.

Also, in Formula [II], $R^3$ is a hydrogen atom or an alkyl group having 1 to 10 carbon atoms, and the alkyl group having 1 to 10 carbon atoms for $R^3$ may be exemplified by the alkyl groups exemplified for $R^1$.

The norbornene compound represented by the above-described Formula [I] or [II] may be specifically exemplified by 5-methylene-2-norbornene, 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, 5-(1,2,3-trimethyl-4-pentenyl) -2-norbornene. Among these, preferred are 5-vinyl-2-norbornene, 5-methyl-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene and 5-(7-octenyl)-2-norbornene. These norbornene compounds can be used alone or in combination of two or more species.

Surprisingly, with these norbornene compounds, a pellet having excellent blocking property can be formed, even if the pellet contains the plasticizer (B) and contains none or a small amount of the thermoplastic resin (C). Further, when the pellet is used as a crosslinked rubber or as a resin modifier of crosslinked type, it has high crosslinking reactivity; when the pellet is used as a crosslinked rubber, it has excellent resistance to compression set; and when the pellet is used as a resin modifier of crosslinked type, it has excellent impact resistance.

The above-described ethylene/α-olefin/non-conjugated polyene random copolymer (A) preferably has the following characteristics.

(i) Intrinsic viscosity [η]

The intrinsic viscosity [η] of the ethylene/α-olefin/non-conjugated polyene random copolymer rubber (A) as measured in decalin at 135°C is not particularly limited, but it is typically from 1 to 10 dl/g. The lower limit is preferably 1.5 dl/g, more preferably 1.6 dl/g, even more preferably 1.8 dl/g, even further preferably 2.0 dl/g, particularly preferably 2.5 dl/g, and most preferably 3.0 dl/g. Meanwhile, the upper limit is preferably 8.0 dl/g, more preferably 6.0 dl/g, particularly preferably 5.0 dl/g, and most preferably 4.5 dl/g. As the preferred range is specifically illustrated, the range is preferably from 1.5 to 8 dl/g, even more preferably from 2 to 6 dl/g, particularly preferably from 2.5 to 5 dl/g, and particularly preferably 3 to 4.5 dl/g. If this intrinsic viscosity [η] is within these ranges, a rubber composition which can provide a crosslinked rubber molded product and a thermoplastic elastomer which are well balanced between the strength properties and processability, can be obtained.

(ii) Molar ratio of ethylene and α-olefin having 3 to 20 carbon atoms (ethylene/α-olefin)

The ethylene/α-olefin/non-conjugated polyene random copolymer rubber (A) contains (a) a unit derived from ethylene and (b) a unit derived from α-olefin having 3 to 20 carbon atoms (hereinafter, sometimes referred to simply as α-olefin), typically in a molar ratio [(a)/(b)] of from 40/60 to 95/5, preferably from 50/50 to 90/10, more preferably from 55/45 to 85/15, and particularly preferably from 60/40 to 80/20.

When this molar ratio is within these ranges, in the case of using the copolymer as a crosslinked rubber, a crosslinked rubber molded product which is excellent in the resistance to thermal aging, strength properties and rubber elasticity, as well as in cold resistance and processability. Further, in the case of using the copolymer as a resin modifier of crosslinked type, it has excellent impact resistance, particularly impact resistance at low temperatures.

(iii) Iodine value

The iodine value of the ethylene/α-olefin/non-conjugated polyene random copolymer rubber (A) is not particularly limited, but it is preferably from 0.5 to 50 (g/100 g), more preferably from 0.8 to 40 (g/100 g), even more preferably from 1 to 30 (g/100 g), and particularly preferably from 1.5 to 25 (g/100 g). When this iodine value is within these ranges, in the case of using the copolymer as a crosslinked rubber, a rubber composition having high crosslinking density can be obtained, and a crosslinked rubber molded product which is excellent in the resistance to compression set as well

as in the resistance to environmental deterioration (= resistance to thermal aging) can be provided. In the case of using the copolymer as a resin modifier of crosslinked type, the impact resistance improves, owing to strong bonding between the resin and the rubber with high grafting efficiency. Further, the crosslinking density of the rubber is increased, thus improving the resistance to compression set, and it becomes difficult for the rubber to undergo deformation, thus improving transparency. Thus, the iodine value is preferably within the ranges. The iodine value is particularly 20 or less, preferably 15 or less, more preferably 12 or less, and even more preferably 10 or less. In this case, processability and the properties after crosslinking in particular are excellent. When the iodine value exceeds 50, it may be disadvantageous in the aspect of costs.

(iv) Molecular weight distribution (Mw/Mn)

The molecular weight distribution (Mw/Mn) of the ethylene/α-olefin/non-conjugated polyene random copolymer rubber (A) as measured by GPC is not particularly limited, but it is typically from 3 to 100, preferably from 3.3 to 75, and more preferably from 3.5 to 50.

When this molecular weight distribution (Mw/Mn) lies within these ranges, in the case of using the copolymer as a crosslinked rubber, a rubber composition which can provide a vulcanized rubber molded product having excellent processability as well as excellent strength properties, can be obtained.

Meanwhile, in the case of using the copolymer as a resin modifier of crosslinked type, excellent performance of improving the strength, processability and impact resistance are obtained.

(v) Mooney viscosity

Mooney viscosity $ML_{(1+4)}$ (125°C) of the ethylene/α-olefin/non-conjugated polyene random copolymer rubber (A) of the invention is preferably greater than or equal to 30. Mooney viscosity is measured according to JIS K 6300.

The ethylene/α-olefin/non-conjugated polyene random copolymer (A) of the invention is more preferably a rubber. The degree of crystallinity of the copolymer (A) of the invention resulting from X-ray diffraction of a pressed sheet is preferably 20% or less.

The ethylene/α-olefin/non-conjugated polyene copolymer (A) used in the invention has a branching index of 0.3 to 0.95. Preferred values for the upper limit of the branching index may include, for example, 0.90, 0.85, 0.80, 0.75, 0.70, 0.65 and 0.60, and smaller values are more preferred. Preferred values for the lower limit of the branching index may include, for example, 0.35 and 0.40. Preferred range for the specific branching index may be exemplified by from 0.3 to 0.90, particularly from 0.3 to 0.85, further particularly from 0.35 to 0.85, further particularly from 0.40 to 0.80, further particularly from 0.40 to 0.75, further particularly from 0.40 to 0.70, further particularly from 0.40 to 0.65, further particularly from 0.45 to 0.65, further particularly from 0.5 to 0.65 and further particularly from 0.5 to 0.60. Within these ranges, there is a tendency that a pellet which has a low degree of crystallinity and does not cause blocking is formed. Further, the branching index can be measured as described in Examples. If the pellet contains a plasticizer (B), GPC measurement and [η] measurement can be carried out after removing the plasticizer by extraction. Further, if the pellet contains a thermoplastic resin (C), GPC measurement and [η] measurement can be carried out after removing the thermoplastic resin. Also, GPC measurement may be carried out with respect to the entire pellet to calculate various average molecular weights from the portion corresponding to (A). With regard to [η], only the portion corresponding to (A) isolated by GPC may be measured to determine the branching index. Further, after subjecting the pellet to composition analysis in advance, [η], GPC of the pellet may be measured, and from the measurement results, the portion contributed by the plasticizer (B) or the thermoplastic resin (C) contained in the pellet can be deducted by calculation, and then the branching index of the component (A) may be determined.

The ethylene/α-olefin/non-conjugated polyene random copolymer rubber (A) used in the invention can be obtained by random copolymerization of the norbornene compound represented by the above Formula [I] or [II] with ethylene and α-olefin having 3 to 20 carbon atoms, in the presence of a catalyst containing the following compounds (J) and (K) as the main components, under the conditions such that polymerization temperature is from 30 to 60°C, abd particularly from 30 to 59°C, polymerization pressure of from 4 to 12 $kgf/cm^2$, and particularly from 5 to 8 $kgf/cm^2$, and a molar ratio of the feed amounts of the non-conjugated polyene and ethylene (non-conjugated polyene/ethylene) is from 0.01 to 0.2. Copolymerization is preferably carried out in a hydrocarbon medium.

(J) Soluble vanadium compound represented by $VO(OR)_nX_{3-n}$ (wherein R is a hydrocarbon group, X is a halogen atom, and n is an integer of 0 or 1 to 3), or a vanadium compound represented by $VX_4$ (wherein X is a halogen atom).

The above-mentioned soluble vanadium compound (J) is a component soluble in a hydrocarbon medium in a polymerization reaction system, and may be specifically exemplified by the vanadium compound represented by Formula $VO(OR)_aX_b$ or $V(OR)_cX_d$ (wherein R is a hydrocarbon group, and $0 \le a \le 3$, $0 \le b \le 3$, $2 \le a + b \le 3$, $0 \le c \le 4$, $0 \le d \le 4$, and $3 \le c + d \le 4$), or such electron donor adducts.

More specifically, the examples may include $VOCl_3$, $VO(OC_2H_5)Cl_2$, $VO(OC_2H_5)_2Cl$, $VO(O\text{-iso-}C_3H_7)Cl_2$, $VO(O\text{-n-}C_4H_9)Cl_2$, $VO(OC_2H_5)_3$, $VOBr_3$, $VCl_4$, $VOCl_3$, $VO(O\text{-n-}C_4H_9)_3$, $VCl_3 \cdot 2OC_6H_{12}OH$.

(K) Organic aluminum compound represented by $R'_mAlX'_{3-m}$ (wherein R' is a hydrocarbon group, X' is a halogen atom, and m is an integer of 1 to 3).

The above-mentioned organic aluminum compound (K) may be specifically exemplified by the following:

trialkylaluminum such as triethylaluminum and tributylaluminum;
dialkylaluminum alkoxide such as diethylaluminum ethoxide and dibutylaluminum butoxide;
alkylaluminum sesquialkoxide such as ethylaluminum sesquiethoxide and butylaluminum sesquibutoxide;
partially alkoxylated alkylaluminum having an average composition represented by $R^1_{0.5}Al(OR^1)_{0.5}$ ;
dialkylaluminum halide such as diethylaluminum chloride and dibutylaluminum chloride;
partially halogenated alkylaluminum, such as alkylaluminum sesquihalide such as ethylaluminum sesquichloride and butylaluminum sesquichloride, and alkylaluminum dihalide such as ethylaluminum dichloride;
partially hydrogenated alkylaluminum, such as dialkylaluminum hydride such as diethylalumium hydride and dibutylaluminum hydride, and alkylaluminum dihydride such as ethylaluminum dihydride
partially alkoxylated and halogenated alkylaluminum such as ethylaluminum ethoxy chloride and butylaluminum butoxy chloride.

According to the invention, when a blend (blending ratio: 1/5 or greater) of a soluble vanadium compound represented by $VOCl_3$ among the above-described compounds (H), and $Al(OC_2H_5)_2Cl/Al_2(OC_2H_5)_3Cl_3$ among the above-described compounds (I) are preferably used as the catalyst components, thereby an ethylene/α-olefin/non-conjugated polyene random copolymer rubber (A) having an insoluble content of 1% or less after Soxhlet extraction (solvent: boiling xylene, extraction time: 3 hours, mesh: 325), can be obtained.

Further, as the catalyst used during the above-described copolymerization, a so-called metallocene catalyst, as disclosed in, for example, JP-A No. 09-40586, may be used.

In addition, for the method of controlling the branching index, the branching index can be controlled by adjusting the content of the non-conjugated polyene of Formula [I], polymerization temperature, polymerization pressure, polymer concentration, kind of the catalyst, kind of the co-catalyst.

Also, the ethylene/α-olefin/non-conjugated polyene random copolymer rubber (A) used in the invention may be graft-modified with a polar monomer such as, for example, an unsaturated carboxylic acid or a derivative thereof (e.g., acid anhydrides and esters).

Such unsaturated carboxylic acid may be specifically exemplified by acrylic acid, methacrylic acid, maleic acid, fumaric acid, itaconic acid, citraconic acid, tetrahydrophthalic acid, bicyclo(2,2,1)hept-2-en-5,6-dicarboxylic acid.

As the acid anhydride of an unsaturated carboxylic acid, mention may be made specifically of maleic anhydride, itaconic anhydride, citraconic anhydride, tetrahydrophthalic anhydride, bicyclo(2,2,1)hept-2-en-5,6-dicarboxylic anhydride. Among these, maleic anhydride is preferred.

As the ester of an unsaturated carboxylic acid, mention may be made specifically of methyl acrylate, methyl methacrylate, dimethyl maleate, monomethyl maleate, dimethyl fumarate, dimethyl itaconate, diethyl citraconate, dimethyl tetrahydrophthalate, dimethyl bicyclo(2,2,1)hept-2-en-5,6-dicarboxylate. Among these, methyl acrylate and ethyl acrylate are preferred.

The above-mentioned graft modifier (graft monomer) such as unsaturated carboxylic acid is used alone or in combination of two or more species, and in any case, the graft amount may be 0.1 mol or less relative to 100 g of the above-described ethylene/α-olefin/non-conjugated polyene copolymer rubber before graft modification.

When the ethylene/α-olefin/non-conjugated polyene random copolymer rubber (A) having a graft amount as described above within the foregoing range is used, a rubber composition which can provide a vulcanized rubber molded product having excellent cold resistance, and which has excellent fluidity (molding processability) can be obtained.

A graft-modified ethylene/α-olefin/non-conjugated polyene random copolymer rubber (A) can be obtained by reacting the above-described unmodified ethylene/α-olefin/non-conjugated polyene copolymer rubber with an unsaturated carboxylic acid or its derivative in the presence of a radical initiator.

This graft reaction can be carried in a solution state or in a molten state. When the graft reaction is performed in a molten state, it is most efficient and preferable to perform the reaction continuously in an extruder.

The radical initiator used in the graft reaction is preferably, for example, organic peroxides for which the temperature adjusting the half-life to one minute is in the range of 130 to 200°C, and particularly organic peroxides such as dicumyl peroxide, di-t-butyl peroxide, di-t-butyl peroxy-3,3,5-trimethylcyclohexane, t-butylcumyl peroxide, di-t-amyl peroxide and t-butyl hydroperoxide are preferred.

Further, as the polar monomer other than unsaturated carboxylic acids or their derivatives (e.g., acid anhydride, ester), mention may be made of a hydroxyl group-containing ethylenic unsaturated compound, an amino group-containing ethylenic unsaturated compound, an epoxy group-containing ethylenic unsaturated compound, an aromatic vinyl compound, a vinyl ester compound, vinyl chloride.

[Plasticizer (B)]

As the plasticizer, for example, the followings are used. Specifically, mention may be made of petroleum-based softeners such as paraffinic process oils, naphthenic process oils, aromatic process oils, co-oligomers of ethylene and α-olefin, paraffin wax, liquid paraffin, white oil, petrolatum, lubricating oil, petroleum asphalt and vaseline;
coal tar-based softeners such as coal tar and coal tar pitch;
fatty oil-based softeners such as castor oil, linseed oil, rapeseed oil and palm oil;
tall oils;
synthetic polymer materials such as petroleum resins, atactic polypropylene and coumarone-indene resins;
phthalic acid derivatives, isophthalic acid derivatives, tetrahydrophthalic acid derivatives, adipic acid derivatives, azelaic acid derivatives, sebacic acid derivatives, dodecanoic diacid derivatives, maleic acid derivatives, fumaric acid derivatives, trimellitic acid derivatives, pyromellitic acid derivatives, citric acid derivatives, itaconic acid derivatives, oleic acid derivatives, ricinolic acid derivatives, stearic acid derivatives, phosphoric acid derivatives, sulfonic acid derivatives, glycerin derivatives, glutaric acid derivatives, epoxy derivatives, glycol derivatives, paraffin derivatives, and silicone oils.

Among these, preferably used are the co-oligomers of ethylene and α-olefin which have essentially a small content of compounds having the chemical reactivity of Lewis base, process oils and paraffin derivatives, and particularly preferably used are paraffinic process oils, co-oligomers of ethylene and α-olefin.

Especially, for the plasticizer (B), those having a crosslinking inhibitory rate of 30% or less can be preferably used. In order to make the crosslinking inhibitory rate 30% or less, the compounds having the chemical reactivity of a Lewis base such as sulfur, nitrogen compounds and phosphorus compounds can be completely removed or reduced to negligible amounts. Further, commercially available products can be used after confirming the crosslinking inhibitory rate.

Moreover, the measurement of crosslinking inhibitory rate is calculated as described below, from the torque due to crosslinking, M1, of a rubber composition having a predetermined liquid EPR mixed therein, and the torque due to crosslinking, M2, of a rubber mixture after having various plasticizers mixed therein:

$$\text{Crosslinking inhibitory rate (\%)} = (M1 - M2)/M1 \times 100$$

(1) Measuring method for the torque due to crosslinking, M1, of a rubber composition mixed with a predetermined liquid EPR

One hundred parts by weight of the ethylene/propylene/5-vinyl-2-norbornene copolymer (A-1) obtained in Preparative Example 1 as described later, 100 parts by weight of the FEF grade carbon black [Asahi Carbon Co., Ltd., tradename: Asahi #60G], 30 parts by weight of liquid EPR [Mitsui Chemical Co., Ltd., tradename: Lucant HC20], 4 parts by weight of a SiH group-containing compound (crosslinking agent) represented by the structural formula (1) [Shin-Etsu Chemical Co., Ltd., tradename: X-93-1346] as a crosslinking agent containing a SiH group, 0.5 part by weight of platinum-1,3,5,7-tetravinyl-1,3,5,7-tetramethylcyclotetrasiloxane complex (0.075 part by weight of 1,3,5,7-tetravinyl-1,3,5,7-tetramethylcyclotetrasiloxane complex-IPA solution at a platinum (zero valence) concentration of 2% [N.E. Chemcat Corp.]) as a catalyst, and 0.3 part by weight of 1-ethynyl-1-cyclohexanol are kneaded together according to Rule A1 of JIS K 6395 (1997).

$$(CH_3)_3SiO\text{-}[\text{-}SiH(CH_3)\text{-}O\text{-}]_6\text{-}[\text{-}Si(CH_3)_2\text{-}O\text{-}]_1\text{-}[\text{-}Si(C_6H_6)_2\text{-}O\text{-}]_1\text{-}Si(CH_3)_3 \qquad (1)$$

This order of kneading was determined such that carbon black, and then a crosslinking agent in place of a vulcanization promoter and sulfur were added to the above-mentioned rubber (A-1), it was confirmed that all of these components were thoroughly mixed, subsequently a reaction inhibitor and a catalyst were added, and it was confirmed that all of the added components were thoroughly mixed. Thus, kneading was performed according to Rule A1.

Next, the torque due to crosslinking of thus obtained mixture is measured at 160°C according to JIS K 6300 (1994). The torque due to crosslinking obtained in this way is the torque due to crosslinking, M1, of a rubber composition blended with a predetermined liquid EPR.

(2) Measurement of the torque due to crosslinking, M2, of a rubber mixture after having various plasticizers mixed therein

One hundred parts by weight of an ethylene/propylene/5-vinyl-2-norbornene copolymer (A-1) obtained in Preparative Example 1 as described later, 100 parts by weight of the FEF grade carbon black [Asahi Carbon Co., Ltd., tradename: Asahi #60G], 30 parts by weight of various plasticizers, 4 parts by weight of the SiH group-containing crosslinking agent having the above-described structural formula (1), 0.5 part by weight of platinum-1,3,5,7-tetravinyl-1,3,5,7-tetramethylcyclotetrasiloxane complex (0.075 part by weight of 1,3,5,7-tetravinyl-1,3,5,7-tetramethylcyclotetrasiloxane complex-IPA solution at a platinum (zero valence) concentration of 2% [N.E. Chemcat Corp.]) as a catalyst, and 0.3 part by weight of 1-ethynyl-1-cyclohexanol are kneaded together according to Rule A1 of JIS K 6395 (1997). This order of kneading was determined such that carbon black, and then a crosslinking agent in place of a vulcanization promoter and sulfur were added to the above-mentioned rubber (A-1), it was confirmed that all of these components were thoroughly mixed, subsequently a reaction inhibitor and a catalyst were added, and it was confirmed that all of the added components were thoroughly mixed. Thus, kneading was performed according to Rule A1.

Next, the torque due to crosslinking of thus obtained mixture is measured at 160°C according to JIS K 6300 (1994). The torque due to crosslinking obtained in this way is the torque due to crosslinking, M2, of a rubber blend blended with various plasticizers.

When an ethylene/α-olefin/non-conjugated polyene copolymer oil-extended by the plasticizer (B) is used, dispersibility of carbon black, white filler can be improved in the case of using the copolymer for a crosslinked rubber, and excellent dispersibility in the resin can lead to improvement of the strength properties in the case of using the copolymer as a resin modifier for a thermoplastic elastomer, as compared with the case of adding a plasticizer later.

The content of the plasticizer (B) in the pellet of the invention is from 1 to 150 parts by weight relative to 100 parts by weight of the ethylene/α-olefin/non-conjugated polyene copolymer (A). The upper limit of the content is preferably 130 parts by weight, and in one preferred embodiment, the upper limit may be 100 parts by weight. The lower limit of the content is preferably 5 parts by weight, more preferably 15 parts by weight, and in many cases the content is 40 parts by weight or more, and sometimes it may be 70 parts by weight or more. A pellet which does not cause blocking in spite of containing more plasticizer can be obtained, and this is the feature of the invention. Specifically, the plasticizer is used in a proportion of preferably from 5 to 130 parts by weight and more preferably from 5 to 100 parts by weight, and the amount of addition is adjusted appropriately depending on the use. Further, the content is more preferably 5 to 60 parts by weight, even more preferably 5 to 40 parts by weight, and particularly preferably 5 to 25 parts by weight, and in another embodiment it is from 25 to 45 parts by weight, or preferably from 45 to 70 parts by weight.

The pellet of the invention may comprise an ethylene/α-olefin/non-conjugated polyene copolymer (A) and a plasticizer (B), and optionally a thermoplastic resin (C), and preferably satisfies the following conditions (i) to (iv) :

(i) the intrinsic viscosity of the ethylene/α-olefin/non-conjugated polyene copolymer is from 1 to 10 dl/g.
With a value greater than or equal to the lower limit of this range, the resistance to adherence between the pellets is good. Further, in the case of crosslinking the copolymer and using it as a crosslinked rubber, the strength properties are good, while in the case of using the copolymer as a resin modifier of crosslinked type, the impact resistance and strength properties are good.
With a value less than or equal to the upper limit of this range, it is easy to process the copolymer into a pellet. At the same time, in the case of using the copolymer as a crosslinked rubber, the processability is excellent, while in the case of using it as a resin modifier of crosslinked type, for example, the dispersibility of the component (A) in the resin is good, and the strength properties are excellent.

(ii) the molar ratio of ethylene/α-olefin in the ethylene/α-olefin/non-conjugated polyene copolymer is in the range of 50/50 to 98/2.
When this molar ratio is greater than or equal to the lower limit, in the case of using the copolymer as a crosslinked rubber, the compression set are excellent, while in the case of using it as a resin modifier of crosslinked type, the impact resistance are excellent. With the ratio being less than or equal to the upper limit, in the case of using the copolymer as a crosslinked rubber, the compression set at low temperatures are excellent, while in the case of using as a resin modifier of crosslinked type, the cold resistance are excellent.

(iii) [η] and the ethylene/α-olefin molar ratio of the ethylene/α-olefin/non-conjugated polyene copolymer satisfy the following expression:

$$-30([\eta] - 2) \leq 3 \times (\text{ethylene}/\alpha\text{-olefin (molar ratio)}).$$

If the value of -30([η] - 2) is less than the value of 3 x (ethylene/α-olefin (molar ratio)), the resistance to adherence between the pellets is good.

(iv) [η] of the ethylene/α-olefin/non-conjugated polyene copolymer satisfies the relationship represented by:

$$[\eta] - 1 \geq 0.05 \times [\text{blending ratio for the plasticizer (\% by weight) in the pellet}].$$

Here, the ratio for plasticizer (% by weight) in the copolymer pellet indicates the ratio of the weight of the plasticizer (B) relative to the sum of the weight of the ethylene/α-olefin/non-conjugated polyene copolymer (A) and the weight of the plasticizer (B) in the pellet, as expressed in percentage.

If the value of [η] - 1 exceeds the value of 0.05 x [blending ratio for the plasticizer (% by weight)], the resistance to adherence between the pellets is good.

[Thermoplastic resin (C)]

The thermoplastic resin (C) used in the invention is not particularly limited, but examples thereof may include polyvinyl chloride, polystyrene, SEPS, SEBS, silicone resins, Nylon 6, Nylon 11, Nylon 12, Nylon 66, polycarbonate, polyacetal, PET, BT, polyolefin resins. Among these, in particular, polyolefin resins (C1) are preferred. As the polyolefin resins (C1), mention may be made specifically of:

ethylene homopolymers (polyethylene) such as high density polyethylene (HDPE), medium density polyethylene (MDPE), low density polyethylene (LDPE) and linear low density polyethylene (LLDPE), or crystalline ethylene/α-olefin copolymers consisting of ethylene and α-olefin having 3 to 20, and preferably 3 to 8 carbon atoms;

polypropylene (C2) such as propylene homopolymers, propylene block copolymers, and propylene random copolymers; and

crystalline homopolymers or copolymers of α-olefin having 3 to 20 carbon atoms, and preferably 3 to 8 carbon atoms, such as propylene, 1-butene, 4-methyl-1-pentene, 1-hexene, 1-heptene and 1-octene. Such a polyolefin has a melting point of 250°C or lower. Among these, polyethylene and polypropylene are preferred, and particularly polypropylene (C2) is preferred.

Also, the thermoplastic resin (C) of the invention preferably has a degree of crystallinity of 20% or higher as measured by X-ray diffraction with a pressed sheet.

The term "polypropylene" as used in the invention may include a homopolymer of propylene, a copolymer of propylene with 0.1 to 20 wt% of ethylene and/or α-olefin having 4 to 20 carbon atoms, and mixtures of these. The copolymer may be a random copolymer or a block copolymer. For polypropylene, the crystalline, isotactic and syndiotactic types can be used.

Moreover, in the case of blending particularly an expanding agent into the rubber composition according to the invention, the polyolefin resin is a crystalline α-olefin homopolymer or a copolymer comprising α-olefin having 3 to 8 carbon atoms, and preferably it is desirable for polypropylene to have a Vicat softening point of 130°C or higher, and preferably 140°C or higher.

According to the invention, the thermoplastic resin (C), preferably the polyolefin resin (C1), is used in a proportion of from 0 to 30 parts by weight, preferably from 0 to 20 parts by weight, more preferably from 0 to 15 parts by weight, even more preferably from 0 to 10 parts by weight, and particularly preferably from 0 to 5 parts by weight, and in a preferred embodiment, the proportion is 0 part by weight, relative to 100 parts by weight of the ethylene/α-olefin/non-conjugated polyene copolymer (A). In the case of using an ethylene/α-olefin/non-conjugated polyene copolymer (A), (C) is used in a proportion of 1 part by weight or more relative to (A) in one embodiment.

Furthermore, according to the invention, it is also possible to carry out pelletization, even though the thermoplastic resin (C) is not added to the ethylene/α-olefin/non-conjugated polyene copolymer (A) and the plasticizer (B), which is another preferred embodiment.

The invention may comprise an ethylene/α-olefin/non-conjugated polyene copolymer (A) and a plasticizer (B), or may also comprise an ethylene/α-olefin/non-conjugated polyene copolymer (A), a plasticizer (B) and a thermoplastic resin (C). But the thermoplastic resin (C) is used in a proportion of 30 parts by weight or less, relative to 100 parts by weight of the ethylene/α-olefin/non-conjugated polyene copolymer (A).

A variety of additives as described later may be contained there.

In addition, there are cases in the process for preparation of the pellet as described later, where the thermoplastic resin is indicated as a thermoplastic resin (C3) and a thermoplastic resin (C4). However, this is to distinguish the thermoplastic resin (C) that is added to the ethylene/α-olefin/non-conjugated polyene copolymer (A) as needed in order to prepare the pellet of the invention, into (C3) and (C4) depending on the time point of addition.

[Process for preparation of pellet]

Next, the process for preparation of the pellet according to the invention will be explained.
Fig. 1 is a schematic diagram of a twin screw triple-vented extruder which is an exemplary multivented extruder used in the process for preparation of the pellet according to the invention.

(Method 1)

In the process for preparation of the pellet containing a vinyl group according to the invention, for example, the content of the organic solvent (D) in a solution comprising 100 parts by weight of the ethylene/α-olefin/non-conjugated polyene copolymer (A) is adjusted to 0 to 10 parts by weight relative to 100 parts by weight of the ethylene/α-olefin/non-conjugated polyene copolymer (A). Further, if needed, a rubber composition (Z) obtained by adding a thermoplastic resin (C3) is introduced into a multivented extruder **1** (twin screw triple-vented extruder in Fig. 1) via a feed section **2** of the extruder **1.** Also, the plasticizer (B) which is an essential component of the pellet of the invention, can be blended into ethylene/α-olefin/non-conjugated polyene copolymer (A) in the presence of the above-mentioned solvent (D) before feeding into the extruder **1,** or the plasticizer (B) can be introduced to the extruder **1** in the mid-flow.

[Organic solvent (D)]

For the organic solvent (D), mention may be made of those a conventionally known hydrocarbon solvent which is used in preparation of an ethylene/α-olefin/non-conjugated polyene copolymer rubber by solution polymerization.
Such the hydrocarbon solvent is specifically exemplified by:

aliphatic hydrocarbons such as pentane, hexane, heptane, octane, decane, dodecane and kerosene, and their halogenated derivatives;
alicyclic hydrocarbons such as cyclohexane, methylcyclopentane and methylcyclohexane, and their halogenated derivatives; and
aromatic hydrocarbons such as benzene, toluene and xylene, and their halogenated derivatives such as chlorobenzene.

These solvents may be used alone or in combination.
The above-mentioned rubber composition (Z) is a mixture of the above-mentioned ethylene/α-olefin/non-conjugated polyene copolymer rubber (A) and the organic solvent (D), as described above.
The content of the organic solvent (D) in this rubber composition (Z) is typically from 0 to 10 parts by weight relative to 100 parts by weight of the ethylene/α-olefin/non-conjugated polyene copolymer rubber (A).
At the same time with introduction of the rubber composition (Z), a thermoplastic resin (C4) is introduced into this extruder 1, as needed, via another feed section 3 under an atmosphere of an inert gas, and the rubber composition (Z) and the thermoplastic resin (C4) are kneaded together and, if necessary, subjected to solvent removal. Thus, a composition of a vinyl group-containing polymer comprising an ethylene/α-olefin/non-conjugated polyene copolymer (A) and a plasticizer (B), and a thermoplastic resin (C), if needed, is obtained. Here, as pelletization is carried out with a pelletizer (not shown in the figure) installed at the end of the extruder **1,** the pellet of the invention is obtained.
Though not shown in the figure, the thermoplastic resin (C4) is metered by a thermoplastic resin meter, transferred to an oxygen purging unit where oxygen is removed using an inert gas, and then fed to the thermoplastic resin feed section **3** of the extruder **1**.
The inert gas may be specifically exemplified by nitrogen gas, argon gas, and nitrogen gas is preferably used. According to the invention, since feeding of the thermoplastic resin (C4) to the extruder is carried out using an inert gas, an ethylene/α-olefin/non-conjugated polyene copolymer pellet preventive of oxidative deterioration can be obtained.
The mixing ratio of the above-described rubber composition (Z) and the thermoplastic resin (C4) is controlled by maintaining a constant screw rotation speed of the extruder **1** and the feed amount of the thermoplastic resin (C4) from the thermoplastic resin meter. Also, as the pressure at the thermoplastic resin feed section **3** is kept lower than the pressure inside the oxygen purging unit, the feed amount of the thermoplastic resin (C4) is stabilized.
According to the invention, the thermoplastic resin (C) is present in the range of 0 to 30 parts by weight relative to 100 parts by weight of the ethylene/α-olefin/non-conjugated polyene copolymer (A). The plasticizer (B) is essential in the invention. Further, despite the presence of only a small amount of the thermoplastic resin, the resulting ethylene/α-olefin/non-conjugated polyene copolymer (A) composition can be easily pelletized, and the resulting pellet does not cause blocking. Also, the vulcanized rubber products prepared from this pellet maintain good rubber elasticity. Also, when this pellet is used in crosslinked resin modification, the dispersibility of component (A) in the resin is improved, and thus the performance of improving the impact resistance is enhanced.

The solvent discharged by the above-mentioned solvent removal is discharged out from extruder **1** via vent holes **4** and recovered.

Also, thus prepared ethylene/α-olefin/non-conjugated polyene copolymer composition inside extruder **1** is withdrawn from outlet **5,** in the pellet form or in the bale form.

When it is desired to prepare the composition in which thermoplastic resin (C) is dispersed in the ethylene/α-olefin/non-conjugated polyene copolymer (A), it is preferred to perform with a kneading device which can provide high shear force. Specifically, a kneading device such as a mixing roll, an intensive mixer (e.g., a Banbury mixer, a kneader), or single-screw or twin-screw extruder can be used, but it is preferred to prepare the composition by kneading with a twin screw extruder. In pelletizatin of this composition, a pellet can be obtained by pelletizing with a pelletizer, and it is most preferred to pelletize continuously with a pelletizer installed at the end of the extruder as described in Methods 1 and 2. By using these, a mixture in which dispersion particles are dispersed with an average diameter of 3 μm or less, can be easily prepared.

(Method 2)

With respect to Method 1, a method which does not involve the use of solvent is illustrated.

In addition, the plasticizer (B) can be mixed into the ethylene/α-olefin/non-conjugated polyene copolymer in the coexistence of a solvent before feeding into the extruder **1,** or alternatively with the introduction of the plasticizer (B) into the extruder **1.**

[Pellet of ethylene/α-olefin/non-conjugated polyene copolymer composition]

The pellet of the ethylene/α-olefin/non-conjugated polyene copolymer composition as prepared by the above-described process for preparation of the pellet according to the invention contains a plasticizer (B) as an essential component and, if needed, contains a small amount of a thermoplastic resin (C).

When the pellet further contains a thermoplastic resin (C), the pellet is a blend in which the thermoplastic resin is microdispersed in the molten state.

"Microdispersion" as used herein is preferably a dispersion in which the average particle size of the thermoplastic resin (C) as measured from a photograph of 10,000 magnifications obtained by transmission electron microscopy (number of measured particles: 40), is 2 μm or less.

Thus prepared pellet of the ethylene/α-olefin/non-conjugated polyene copolymer composition, when used as a rubber of crosslinked type, is usually further kneaded by a conventional rubber kneading machine or a continuous kneading machine such as a Banbury mixer, an intermix or a kneader, together with a reinforcing agent such as carbon black, a filler such as talc or clay, or a blending agent such as a plasticizer, a vulcanization promoter or a vulcanizing agent. The thermoplastic resin (blended if needed) in the rubber compound obtained by this kneading is very well dispersed.

The pellet of the invention is not particularly limited, but it is in the form of sphere, cylinder, prism or sponge, and the aspect ratio is preferably 5 or less, even more preferably 3 or less, particularly preferably 2 to 1, and particularly preferably 1.5 to 1.

Further, the size is not particularly limited, but it is typically from 0.1 to 50 mm, preferably from 0.5 to 30 mm, even more preferably from 1 to 10 mm, and particularly preferably from 3 to 8 mm. Regarding the size of pellet, for example, 10 arbitrarily selected pellets are measured at the respective maximum length Lmax and the minimum length Lmin using a vernier caliper, and the average values thereof is indicated as the size of pellet.

$$\text{Diameter} = (Lmax1 + Lmax2 + Lmax3 + Lmax4 + Lmax5 + Lmax6 + Lmax7 + Lmax8 + Lmax9 + Lmax10 + Lmin1 + Lmin2 + Lmin3 + Lmin4 + Lmin5 + Lmin6 + Lmin7 + Lmin8 + Lmin9 + Lmin10)/20$$

Also, the pellet of the invention may comprise an additive for the purpose of preventing blocking by powder on the surface, but the pellet of the invention shows excellent handlability even without containing blocking preventing agent, which is one of the feature of the invention.

The pellet of the invention may be used as such, but as described later, preferred are the use in crosslinking, the use as a resin modifier of crosslinked type and the use as a raw material for a thermoplastic elastomer, being mixed with other resins, and crosslinked, if necessary. An explanation will be given on the crosslinking agent preferably used in crosslinking and a composition for crosslinking in the following.

[Crosslinking agent (E)]

As the crosslinking agent (E), a sulfur vulcanizing agent, a quinoid crosslinking agent, a resin crosslinking agent, an organic peroxide crosslinking agent, a crosslinking agent utilizing a hydrosilylation reaction, which are generally used for EPR and EPDM, are used.
Among these, an organic peroxide crosslinking agent (E-1) and a crosslinking agent having a SiH group (E-2) are particularly preferred.
Such the crosslinking agent is particularly highly reactive with the carbon-carbon double bond such as a vinyl group, and in the case of using the polymer for a crosslinked rubber, the resistance to compression set or anti-blooming property is excellent, while in the case of using the polymer for a resin modifier of crosslinked type, the performance of improving the resistance to compression set or impact resistance is excellent.
The organic peroxide (E-1) is not particularly limited, but among them, those organic peroxides for which the temperature adjusting the half-life to one minute is in the range of 130 to 200°C are preferred. Especially, organic peroxides such as dicumyl peroxide, di-t-butyl peroxide, dit-butylperoxy-3,3,5-trimethylcyclohexane, t-butylcumyl peroxide, di-t-amyl peroxide and t-butyl hydroperoxide are preferred.
The SiH group-containing compound (E-2) is not particularly limited in its molecular structure, and those conventionally prepared resinous products, for example, having a linear, cyclic, branched or three-dimensional network structure can be used, provided that one such molecule contains at least two, preferably three or more hydrogen atoms directly bonded to silicon atoms, that is, SiH groups.
For such the SiH group-containing compound (E-2), typically a compound represented by the following general compositional formula can be used:

$$R^4{}_bH_cSiO_{(4-b-c)/2}$$

In this general compositional formula, $R^4$ is a substituted or unsubstituted monovalent hydrocarbon group having 1 to 10 carbon atoms, and particularly 1 to 8 carbon atoms, excluding the aliphatic unsaturated bonds, and such monovalent hydrocarbon group can be exemplified by, in addition to the alkyl groups described for $R^1$ in the above, a phenyl group, a halogen-substituted alkyl group, for example, a trifluoropropyl group. Among these, a methyl group, an ethyl group, a propyl group, a phenyl group and a trifluoropropyl group are preferred, and a methyl group is particularly preferred.
Further, b is such that $0 \le b < 3$, preferably $0.6 < b < 2.2$, and particularly preferably $1.5 \le b \le 2$, and c is such that $0 < c \le 3$, preferably $0.002 \le c < 2$, and particularly preferably $0.01 \le c \le 1$, while b + c being such that $0 < b + c \le 3$, and preferably $1.5 < b + c \le 2.7$.
This SiH group-containing compound (E-1) is an organohydrogenpolysiloxane having preferably from 2 to 1000, particularly preferably from 2 to 300, and most preferably from 4 to 200 silicon atoms per molecule, and specific examples thereof include:

siloxane oligomers such as 1,1,3,3-tetramethyldisiloxane, 1,3,5,7-tetramethyltetracyclosiloxane, and 1,3,5,7,8-pentamethylpentacyclosiloxane;
methylhydrogenpolysiloxane terminated with trimethylsiloxy groups at the both ends of the molecular chain, dimethylsiloxane/methylhydrogensiloxane copolymer terminated with trimethylsiloxy groups at the both terminals of the molecular chain, methylhydrogenpolysiloxane terminated with silanol groups at the both terminals of the molecular chain, dimethylsiloxane/methylhydrogensiloxane copolymer terminated with silanol groups at the both terminals of the molecular chain, dimethylpolysiloxane terminated with dimethylhydrogensiloxy groups at the both terminals of the molecular chain, methylhydrogenpolysiloxane terminated with dimethylhydrogensiloxy groups at the both terminals of the molecular chain, dimethylsiloxane/methylhydrogensiloxane copolymer terminated with dimethylhydrogensiloxy groups at the both terminals of the molecular chain, and silicone resins which comprise the $R^2{}_2(H)SiO_{1/2}$ unit and $SiO_{4/2}$ unit and may arbitrarily contain the $R^2{}_3SiO_{1/2}$ unit, $R^2{}_2SiO_{2/2}$ unit, $R_2(H)SiO_{2/2}$ unit, $(H)SiO_{3/2}$ or $R_2SiO_{3/2}$ unit.

For the methylhydrogenpolysiloxane terminated with trimethylsiloxy groups at the both terminals of the molecular chain, mention may be made of, for example, a compound represented by the following formula, and also a compound having part or all of the methyl groups in the following formula substituted with an ethyl group, a propyl group, a phenyl

group or a trifluoropropyl group:

$$(CH_3)_3SiO\text{-}(\text{-}SiH(CH_3)\text{-}O\text{-})_d\text{-}Si\ (CH_3)_3$$

wherein d is an integer of 2 or greater.

For the dimethylsiloxane/methylhydrogensiloxane copolymer terminated with trimethylsiloxy groups at the both terminals of the molecular chain, mention may be made of a compound represented by the following formula, and also a compound having part or all of the methyl groups in the following formula substituted with an ethyl group, a propyl group, a phenyl group, a trifluoropropyl group:

$$(CH_3)_3SiO\text{-}(\text{-}Si(CH_3)_2\text{-}O\text{-})_e\text{-}(\text{-}SiH(CH_3)\text{-}O\text{-})_f\text{-}Si(CH_3)_3$$

wherein e is an integer of 1 or greater, and f is an integer of 2 or greater.

For the mehylhydrogenpolysiloxane terminated with silanol groups at the both terminals of the molecular chain, mention may be made of, for example, a compound represented by the following formula, and also a compound having part or all of the methyl groups in the following formula substituted with an ethyl group, a propyl group, a phenyl group, a trifluoropropyl group:

$$HOSi\ (CH_3)_2O\text{-}(\text{-}SiH\ (CH_3)\ \text{-}O\text{-})_2\text{-}Si(CH_3)\ _2OH$$

For the dimethylsiloxane/metylhydrogensiloxane copolymer terminated with silanol groups at the both terminals of the molecular chain, mention may be made of, for example, a compound represented by the following formula, and also a compound having part or all of the methyl group in the following formula substituted with an ethyl group, a propyl group, a phenyl group, a trifluoropropyl group:

$$HOSi\ (CH_3)_2O\text{-}(\text{-}Si\ (CH_3)\ _2\text{-}O\text{-})_e\text{-}\ (\text{-}SiH\ (CH_3)\ \text{-}O\text{-})_f\text{-}Si(CH_3)\ _2OH$$

wherein e is an integer of 1 or greater, and f is an integer of 2 or greater.

For the dimethylpolysiloxane terminated with dimethylhydrogensiloxy groups at the both terminals of the molecular chain, mention may be made of, for example, a compound represented by the following formula, and also a compound having part or all of the methyl group in the following formula substituted with an ethyl group, a propyl group, a phenyl group, a trifluoropropyl group:

$$HSi\ (CH_3)_2O\text{-}(\text{-}Si\ (CH_3)_2\text{-}O\text{-})_e\text{-}Si\ (CH_3)_2H$$

wherein e is an integer of 1 or greater.

For the methylhydrogenpolysiloxane terminated with dimethylhydrogensiloxy groups at the both terminals of the molecular chain, mention may be made of, for example, a compound represented by the following formula, and also a compound having part or all of the methyl group in the following formula substituted with an ethyl group, a propyl group, a phenyl group, a trifluoropropyl group:

$$HSi(CH_3)_2O\text{-}(\text{-}SiH(CH_3)\text{-}O\text{-})_e\text{-}Si(CH_3)_2H$$

wherein e is an integer of 1 or greater.

For the dimethylsiloxane/methylhydrogensiloxane copolymer terminated with dimethylhydrogensiloxy groups at the both terminals of the molecular chain, mention may be made of, for example, a compound represented by the following formula, and also a compound having part or all of the methyl group in the following formula substituted with an ethyl group, a propyl group, a phenyl group, a trifluoropropyl group or the like, etc.:

$$HSi(CH_3)_2O\text{-}(\text{-}Si(CH_3)_2\text{-}O\text{-})_e\text{-}(\text{-}SiH(CH_3)\text{-}O\text{-})_h\text{-}Si(CH_3)_2H$$

wherein e and h are each an integer of 1 or greater.

These compounds can be prepared by known methods, and such compound can be easily obtained by, for example, subjecting a compound containing a triorganosilyl group or a diorganohydrogensiloxy group such as octamethylcyclotetrasiloxane and/or tetramethylcyclotetrasiloxane, and hexamethyldisiloxane or 1,3-dihydro-1,1,3,3-tetramethyldisiloxane which can be a terminal group, to equilibration at a temperature of approximately -10°C to +40°C in the presence of a catalyst such as sulfuric acid, trifluoromethane sulfonic acid or methanesulfonic acid.

The SiH group-containing crosslinking agent (E-2) is used in a proportion of from 0.1 to 50 parts by weight,

preferably from 0.1 to 40 parts by weight, more preferably from 0.1 to 30 parts by weight, even more preferably from 0.2 to 20 parts by weight, still more preferably from 0.2 to 15 parts by weight, particularly preferably from 0.5 to 10 parts by weight, and most preferably from 0.5 to 5 parts by weight, relative to 100 parts by weight of the ethylene/α-olefin/non-conjugated polyene copolymer (A). When it is used in a proportion within these ranges, in the case of using the polymer as a crosslinked rubber, a rubber composition which can form a crosslinked rubber molded product having excellent the resistance to compression set as well as excellent strength properties and elongation properties resulting from appropriate crosslinking density, can be obtained. In the case of the polymer as a resin modifier of crosslinked type, the performance of improving the impact resistance and compression set is excellent. When it is used in a proportion exceeding 100 parts by weight, it may be disadvantageous in view of costs.

Also, the ratio of the SiH group to the aliphatic unsaturated group (SiH group/aliphatic unsaturated group) involved in crosslinking of the ethylene/α-olefin/non-conjugated polyene copolymer (A) is preferably 0.2 to 20, further preferably 0.5 to 10, and particularly 0.7 to 5.

A catalyst (F) which is used as an optional component of the invention is a catalyst for addition reaction, and it is used to promote the hydrosilylation reaction by a SiH group-containing compound. There is no limitation therefor as long as it promotes the addition reaction between the above-mentioned carbon-carbon double bond derived from the ethylene/α-olefin/non-conjugated polyene copolymer (A) component and the SiH group of the SiH group-containing compound (hydrosilylation reaction of alkene), and mention may be made of, for example, the catalysts for addition reaction comprising the platinum family elements such as platinum catalysts, palladium catalysts and rhodium catalysts [Group 8 (in the Periodic Table of elements) metal-based catalysts such as Group 8 metals, Group 8 metal complexes or Group 8 metal compounds]. Among these, platinum catalysts are preferred.

The platinum catalysts may be typically those known ones used in curing of the addition curing type, and examples thereof may include the micronized metallic platinum catalyst as described in USP No. 2,970,150, the chloroplatinic acid catalyst as described in USP No. 2,823,218, the complex compounds of platinum with hydrocarbons as described in USP No. 3,159,601 and USP No. 159, 662, the complex compound of chloroplatinic acid with olefin as described in USP No. 3,516,946, the complex compounds of platinum with vinylsiloxane as described in USP No. 3,775,452 and USP No. 3, 814, 780. More specifically, mention may be made of elemental platinum (platinum black), chloroplatinic acid, platinum-olefin complex, platinum-alcohol complex, or the platinum catalyst supported on a support such as alumina or silica.

The palladium catalyst includes palladium, palladium compounds or chloropalladic acid, and the rhodium catalyst includes rhodium, rhodium compounds, chlororhodic acid.

The catalyst (F) is used in a proportion of 0.1 to 100,000 ppm by weight, preferably 0.1 to 10,000 ppm by weight, and even more preferably 1 to 5,000 ppm by weight, relative to 100 parts by weight of the ethylene/α-olefin/non-conjugated polyene copolymer (A).

When the catalyst (F) is used in a proportion within these ranges, the crosslinking rate is appropriate. When the catalyst (F) is used in a proportion exceeding 100,000 ppm by weight, the crosslinking rate becomes too high, as well as it becomes disadvantageous in view of costs, thus it being not desirable.

Moreover, according to the invention, it is also possible to obtain a crosslinked rubber molded product by irradiating a non-vulcanized rubber molded product of a rubber composition not containing the above-mentioned catalyst (F), with light, γ-ray, electron beam.

[Reaction inhibitor (G)]

For the reaction inhibitor (G) which is used as an optional component together with the catalyst (F) in the invention, mention may be made of organic peroxides such as benzotriazole, ethynyl group-containing alcohol (e.g.,' ethynylcyclohexanol), acrylonitrile, amide compounds (e.g., N,N-diallylacetamide, N,N-diallylbenzamide, N,N,N',N'-tetraaryl-o-phthalic acid diamide, N,N,N',N'-tetraaryl-m-phthalic acid diamide, N,N,N',N'-tetraaryl-p-phthalic acid diamide), sulfur, phosphorus, nitrogen, amine compounds, sulfur compounds, phosphorus compounds, tin, tin compounds, tetramethyltetravinylcyclotetrasiloxane, and hydroperoxides.

The reaction inhibitor (G) is used in a proportion of from 0 to 50 parts by weight, typically from 0.0001 to 50 parts by weight, preferably from 0.0001 to 30 parts by weight, more preferably from 0.0001 to 20 parts by weight, even more preferably from 0.0001 to 10 parts by weight, and particularly preferably from 0.0001 to 5 parts by weight, relative to 100 parts by weight of the ethylene/α-olefin/non-conjugated polyene copolymer (A).

When the reaction inhibitor (G) is used in a proportion of 50 parts by weight or less, it is well balanced between the induction period taken up to the initiation of crosslinking and the crosslinking rate. When reaction inhibitor (G) is used in a proportion exceeding 50 parts by weight, the crosslinking rate may become too low, or it may be disadvantageous in view of costs.

[Other components]

The pellet of the ethylene/α-olefin/non-conjugated polyene copolymer composition according to the invention may be used in the non-crosslinked state, but it can exhibit its properties best when used as a vulcanized product such as a crosslinked rubber molded product or crosslinked rubber expansion molded product.
In using the pellet according to the invention, additives such as a conventionally known rubber reinforcing agent, an inorganic filler, a plasticizer, an anti-aging agent, a processing aid, a vulcanization promoter, organic peroxides, a vulcanizing aid, an expanding agent, an expanding aid, a coloring agent, a dispersing agent and a flame-retardant can be blended, in accordance with the intended use of the crosslinked product, within the scope not impairing the object of the invention.
The rubber reinforcing agent has an effect of enhancing mechanical properties such as the tensile strength, fracture strength, abrasion resistance of a vulcanized rubber. Such rubber reinforcing agent may be specifically exemplified by carbon blacks such as SRF, GPF, FEF, HAF, ISAF, SAF, FT and MT, the foregoing carbon blacks which are further surface-treated with a silane coupling agent, pulverized silicic acid or silica.
Specific examples of silica may include fumed silica, precipitated silica. Such silica may be surface-treated with reactive silane such as hexamethyldisilazane, chlorosilane or alkoxysilane, or low molecular weight siloxane. Also, the specific surface area (BED method) of the silica is preferably 50 $m^2/g$ or more, and more preferably 100 to 400 $m^2/g$.
The kind and blending amount of such rubber reinforcing agent may be appropriately selected depending on the use, but the blending amount of the rubber reinforcing agent is typically up to 300 parts by weight, and preferably up to 200 parts by weight, relative to 100 parts by weight of the ethylene/α-olefin/non-conjugated polyene copolymer (A).
The inorganic filler may be specifically exemplified by precipitated calcium carbonate, ground calcium carbonate, talc or clay.
The kind and blending amount of such inorganic filler may be appropriately selected depending on the use, but the blending amount of the inorganic filler is typically up to 300 parts by weight, and preferably up to 200 parts by weight, relative to 100 parts by weight of the ethylene/α-olefin/non-conjugated polyene copolymer (A).
The anti-aging agent may be exemplified by amine-based, hindered phenol-based or sulfur-based anti-aging agents, and such anti-aging agent is used within the scope not impairing the object of the invention, as described above.
The amine-based anti-aging agent used in the invention may include diphenylamines, phenylenediamines.
Examples of diphenylamines specifically include p-(p-toluene/sulfonylamido)-diphenylamine, 4,4'-(α,α,-dimethylbenzyl)diphenylamine, 4,4'-dioctyl/diphenylamine, a high temperature reaction product of diphenylamine and acetone, a low temperature reaction product of diphenylamine and acetone, a low temperature reaction product of diphenylamine and aniline and acetone, a reaction product of diphenylamine and diisobutylene, octylated diphenylamine, dioctylated diphenylamine, p,p'-dioctyl/diphenylamine, alkylated diphenylamine.
Examples of phenylenediamines include specifically p-phenylenediamines such as N,N'-diphenyl-p-phenylenediamine, n-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, phenylhexyl-p-phenylenediamine, phenyloctyl-p-phenylenediamine.
Among these, particularly 4,4'-(α,α-dimethylbenzyl)diphenylamine and N,N'-di-2-naphthyl-p-phenylenediamine are preferred.
These compounds can be used alone or in combination of two or more species.
The hindered phenol-based anti-aging agent used in the invention is such that conventionally known ones can be used without limitation, and specific examples thereof preferably include:

(1) tetrakis-[methylene-3-(3',5'-di-t-butyl-4'-hydroxyphenyl)propionatemethane,
(2) 3,9-bis[2-{3-(3-t-butyl-4-hydroxy-5-methylphenyl)propionyloxy}-1,1-dimethylethyl]-2,4,8,10-tetraoxaspiro[5,5] undecane.

The sulfur-based anti-aging agent used in the invention is the sulfur-based anti-agents conventionally used for rubber.
Specifically, mention may be made of imidazole-based anti-aging agents such as 2-mercaptobenzimidazole, zinc salts of 2-mercaptobenzimidazole, 2-mercaptomethylbenzimidazole, zinc salts of 2-mercaptomethylbenzimidazole, and zinc salts of 2-mercaptomethylimidazole;
aliphatic thioether-based anti-aging agents such as dimyristylthiodipropionate, dilaurylthiodipropionate, distearylthiodipropionate, ditridecylthiodipropionate, and pentaerythritol-tetrakis-(β-laurylthiopropionate). Among these, especially preferred are 2-mercaptobenzimidazole, zinc salts of 2-mercaptobenzimidazole, 2-mercaptomethylbenzimidazole, zinc salts of 2-mercaptomethylbenzoimiazole, and pentaerythritol-tetrakis-(β-lauryl-thiopropionate).

For the processing aid, the compounds used in conventional processing of rubber can be used. Specifically, mention may be made of higher fatty acids such as ricinolic acid, stearic acid, palmitic acid and lauric acid; salts of higher fatty acids such as barium stearate, zinc stearate and calcium stearate; esters of higher fatty acids such as ricinolic acid, stearic acid, palmitic acid and lauric acid.

Such processing aid is typically used in a proportion of 10 parts by weight or less, and preferably 5 parts by weight or less, relative to 100 parts by weight of the ethylene/α-olefin/non-conjugated polyene copolymer (A). However, it is preferable to determine an appropriate optimum amount in accordance with the required properties.

According to the invention, both the addition crosslinking and radical crosslinking may be carried out using organic peroxide, besides the above-described catalyst (F). The organic peroxide is used in a proportion of 0.1 to 10 parts by weight relative to 100 parts by weight of the ethylene/α-olefin/non-conjugated polyene copolymer (A). For the organic peroxide, those conventionally known ones that are typically used in crosslinking of rubber can be used.

Further, when organic peroxide is used, it is preferable to use a vulcanizing aid in combination.

Examples of the vulcanizing aid may include, specifically, sulfur; quinonedioxime compound such as p-quinonedioxime; methacrylate compounds such as polyethylene glycol dimethacrylate; allyl compounds such as diallyl phthalate and triallylcyanurate; maleimide compounds; divinylbenzene. Such vulcanizing aid is used in a proportion of 0.5 to 2 moles, and preferably in an approximately equimolar amount, relative to 1 mole of the organic peroxide used.

It is a preferred embodiment to perform crosslinking using components (E), (F), (G) and other components as described above.

Furthermore, the expanded product obtained using the pellet of the invention is not particularly limited in the expansion ratio, but low expansion products of 1- to 4-fold expansion and high expansion products of 4- to 50-fold expansion are suitable in practice or for production in industrial scale.

[Use of pellet]

The pellet of the invention can be used, for example, for a crosslinked rubber. The term crosslinked rubber as used herein is synonymous with "vulcanized rubber" in ISO 1392(1996) 373, and it means a thermocurable elastomer.

For the use for a crosslinked rubber, for example, (B) is used in a proportion of from 1 to 150 parts by weight relative to 100 parts by weight of (A), and preferably the lower limit is 5 parts by weight, while the upper limit is 130 parts by weight and more preferably 100 parts by weight. An example of preferred range is from 1 to 50 parts by weight, and particularly preferably 10 to 30 parts by weight. Further, (C) is used in a proportion of from 0 to 30 parts by weight, and the upper limit is preferably 20 parts by weight and more preferably from 10 parts by weight. It is also a preferred embodiment that (C) is not contained at all.

The shape of the pellet when used for a crosslinked rubber is preferably spherical, cylindrical, prismatic or spongy, and the aspect ratio is preferably from 2 to 1. The size is preferably from 3 to 50 mm, more preferably from 5 to 30 mm, and particularly preferably from 5 to 20 mm.

The pellet of the invention can be used, for example, for resin modifier of crosslinked type. The term use for resin modifier of crosslinked type as used herein means that the pellet can be mixed into a resin under the purpose of improving the performance of the resin, while it can be used in the crosslinked state. For example, as the resins resulting from improvement of impact resistance of AS resins or PS resins, DCPD resins, ABS resins, AES resins or HIPS resins are available. However, these are obtained by subjecting the rubber which has been incorporated upon polymerization of AS resin or PS resin, to crosslinking and phase transition. The rubber used therein is a resin modifier of crosslinked type and at the same time, a raw material for AES (resin modifier of crosslinked type in a polymer form). In addition to that, TPO which is polypropylene mixed with EPDM and further subjected to dynamic crosslinking, is available as thermoplastic elastomer. The EPDM used therein modifies impact resistance or rubber elasticity of PP resin, and thus it is a resin modifier of crosslinked type and at the same time, a raw material for TPO.

For example, when the pellet is used as a resin modifier of crosslinked type in a polymer form, (B) is used in a proportion of preferably from 0 to 20 parts by weight, more preferably from 0 to 10 parts by weight, and particularly preferably 0 part by weight, relative to 100 parts by weight of (A). (C) is used in a proportion of preferably from 0 to 20 parts by weight, more preferably from 0 to 10 parts by weight, and particularly preferably 0 part by weight, relative to 100 parts by weight of (A).

In this case, the shape of pellet is preferably spherical, cylindrical or prismatic, and the aspect ratio is preferably from 2 to 1. The size is preferably from 0.1 to 10 mm, more preferably from 1 to 10 mm, and particularly preferably from 1 to 5 mm.

When the pellet is used as a modifier for AS resins, PS resins, DCPD resins, as described in Koji Saeki and Shinzo Omi, "New Polymer Preparation Process" (1996), a method can be illustrated in which an ethylene/α-olefin/non-conjugated polyene copolymer is dissolved in a solvent and polymerized together with the raw material monomer and polymerization initiator in a polymerization bath, and then the ethylene/α-olefin/non-conjugated polyene copolymer is microdispersed in the resin by phase transition. Also, the method described in JP-A No. 10-120838 can be illustrated.

When the pellet is used as a resin modifier of crosslinked type in a blend form, the pellet is preferably of the same amount ratios of (A), (B) and (C) as described above, but (B) is used in a proportion of, for example, from 1 to 150 parts by weight, preferably from 5 to 100 parts by weight, more preferably from 10 to 100 parts by weight, and even more preferably from 20 to 80 parts by weight, relative to 100 parts by weight of (A). In some embodiments, it can be used in a proportion of 40 to 60 parts by weight. (C) is preferably used in a proportion of 30 parts by weight or less, preferably from 10 to 30 parts by weight, and even more preferably from 20 to 30 parts by weight, relative to 100 parts by weight of (A). Also, it is a preferred embodiment that (C) is not contained at all.

In this case, the shape of the pellet is preferably spherical, cylindrical or prismatic, and the aspect ratio is preferably from 2 to 1. The size is preferably from 1 to 20 mm, more preferably from 2 to 8 mm, and particularly preferably from 4 to 8 mm.

When the pellet is used for a crosslinked rubber, preferred applications may include, for example, weather strip for automobiles; an automobile hose, a water hose, a gas hose; a rubber pad for automobiles, a rubber pad for railroad, a rubber pad for industrial machinery, antiseismic rubber bearings for construction; a driving belt, a conveyor belt; a cup seal for automobiles, a seal for industrial machinery; a weather strip sponge for automobiles, a seal sponge for construction or other foams; a coated wire, a wire joint, electric insulating parts, semiconductive rubber parts; a roll for OA machinery, an industrial roll; and domestic rubber products.

When the pellet is used as a resin modifier of crosslinked type in a polymer form, it is preferably used as a raw material for AES resins.

When the pellet is used as a resin modifier of crosslinked type in a blend form, it is preferably used as a raw material for a thermoplastic elastomer such as TPO.

When the pellet is used as a raw material for a thermoplastic elastomer, the method for preparation of a thermoplastic elastomer can be exemplified by the method described in JP-A No. 11-335501. When the pellet of the invention is used in modification of various resins or in preparation of the above-described thermoplastic elastomers, resin compositions or thermoplastic elastomers in which the dispersibility of the ethylene/$\alpha$-olefin/non-conjugated polyene copolymer (A) component is excellent, can be prepared with good workability and work-efficiency.

According to the invention, it is possible to prepare a thermoplastic elastomer by performing dynamic crosslinking with the above-described pellet of the ethylene/$\alpha$-olefin/non-conjugated polyene copolymer composition.

Conventionally, in order to use the pellet of the ethylene/$\alpha$-olefin/non-conjugated polyene copolymer composition of the invention in dynamic crosslinking, the corresponding pellet can be dynamically heat-treated, together with a thermoplastic resin such as a polyolefin resin if needed, and even with a plasticizer if needed, in the presence of a crosslinking agent to obtain a thermoplastic elastomer.

Upon preparation of a thermoplastic elastomer, when other components described above are to be blended in, a method may be used in which the pellet of the ethylene/$\alpha$-olefin/non-conjugated polyene copolymer composition is kneaded with other components added, according to the above-described method, to prepare the pellet of a composition containing other components. Blending of other components can be carried out using a kneading device such as a mixing roll, an intensive mixer (e.g., a Banbury mixer, a kneader, a single-screw or twin-screw extruder or the like. Among these, a twin screw extruder is preferred from the viewpoint of dispersibility and throughput per unit time. However, it is also preferable, upon dynamic heat treatment, to supply the above-mentioned pellet and other components to a twin screw extruder, after merely mixing them without preliminarily kneading the other components with the pellet, or separately.

In the process for preparation of the thermoplastic elastomer of the invention, the above-mentioned dynamic heat treatment (also referred to as dynamic crosslinking) is carried out by adding the above-mentioned crosslinking agent, and if necessary, a crosslinking aid, a catalyst and an inhibitor to the pellet of the ethylene/$\alpha$-olefin/non-conjugated polyene copolymer composition, and kneading the pellet of the ethylene/$\alpha$-olefin/non-conjugated polyene copolymer composition together with a thermoplastic resin such as a polyolefin resin which is used as needed and with a plasticizer which is used as needed, in the molten state. This dynamic heat treatment can be carried out using a kneading device such as a mixing roll, an intensive mixer (e.g., a Banbury mixer or a kneader), a single-screw or twin-screw extruder. Among these, the twin screw extruder is preferred from the viewpoint of dispersibility and throughput per unit time. Also, according to the invention, it is preferable to carry out dynamic crosslinking by continuously supplying the above-mentioned pellet into a melt kneading machine. Upon supplying of the pellet, it is preferable to carry out dynamic crosslinking by supplying the thermoplastic resin such as polyolefin which is used as needed or the plasticizer which is used as needed, to a kneading device such as a twin screw extruder, after merely mixing the other components with the above-mentioned pellet without preliminarily kneading them together, or separately.

Furthermore, it is preferable to carry out the dynamic heat treatment (dynamic crosslinking) in a non-open type kneading device in the presence of an inert gas such as nitrogen. It is also preferable to carry out dynamic crosslinking by supplying the pellet according to the invention continuously to a melt kneading machine.

EXAMPLES

Hereinafter, the invention will be described by way of Examples, which are not, however, intended to limit the invention.

[Preparative Example A-1]

[Preparation of ethylene/propylene/5-vinyl-2-norbornene random copolymer rubber (A-1)]

Terpolymerization of ethylene, propylene and 5-vinyl-2-norbornene was carried out continuously using a polymerization vessel made of stainless steel which has a substantial capacity of 100 liters and which is equipped with a stirring blade (rotation speed of stirrer = 250 rpm). Through a side portion of the polymerization vessel, the following monomers and components were continuously supplied in the liquid phase at the below-described rates: hexane at 60 liters/hr, ethylene at 3.8 kg/hr, propylene at 7.7 kg/hr, 5-vinyl-2-norbornene at 180 g/hr, and hydrogen at 40 liters/hr, $VO(OEt)Cl_2$ and $Al(Et)_{1.5}Cl_{1.5}$ as catalysts at 10 mmol/hr and 70 mmol/hr, respectively.

As copolymerization reaction was carried out under the conditions as described in the above, an ethylene/propylene/5-viyl-2-norbornene random copolymer rubber (A-1) was obtained in the state of a homogeneous solution.

Then, to the polymerization solution continuously withdrawn from the bottom of the polymerization vessel, a small amount of methanol was added to stop the polymerization reaction, and the polymer was separated from the solvent by steam stripping treatment and then was dried in vacuum at 55°C for 48 hours.

The properties of thus obtained ethylene/propylene/5-vinyl-2-norbornene random copolymer rubber (A-1) are presented in Table 1.

[Preparative Examples A-2 and A-3]

An ethylene/propylene/5-vinyl-2-norbornene random copolymer rubber (A-2) and an ethylene/propylene/5-ethylidene-2-norbornene random copolymer rubber (A-3) having different properties and states were obtained by changing the polymerization conditions of Preparative Example 1 to those as shown in Table 1.

The composition, iodine value, intrinsic viscosity [η], molecular weight distribution (Mw/Mn) and branching index of thus obtained copolymer rubbers were measured or determined according to the following methods.

The properties of thus obtained copolymer rubbers are presented in Table 1.

[Table 1]

| | A-1 | A-2 | A-3 |
|---|---|---|---|
| Polymerization conditions | | | |
| Catalyst | $VO(OEt)Cl_2$ | $VO(OEt)Cl_2$ | $VO(OEt)Cl_2$ |
| Co-catalyst | $Al (Et)_{1.5}Cl_{1.5}$ | $Al(Et)_{1.5}Cl_{1.5}$ | $Al (Et)_{1.5}Cl_{1.5}$ |
| Al/V | 7 | 7 | 7 |
| Polymerization temperature, °C | 40 | 40 | 45 |
| Polymerization Pressure, MPa | 0.6 | 0.6 | 0.7 |
| Catalyst feed, mmol/h | 10 | 10 | 35 |
| Polyene | VNB | VNB | ENB |
| Polyene feed (ENB), g/h | - | - | 320 |
| Polyene feed (VNB), g/h | 180 | 180 | - |
| α-Olefin | Propylene | Propylene | Propylene |
| Ethylene/α-olefin feed, kg/h | 3.8/7.7 | 3.8/7.7 | 3.8/3.0 |
| $H_2$, NL/h | 40 | 40 | 40 |
| Yield amount kg/h | 4 | 5 (introduction of oil extension) | 5 (introduction of oil extension) |
| Properties of produced | | | |

(continued)

| | A-1 | A-2 | A-3 |
|---|---|---|---|
| copolymer | | | |
| Ethylene content, mol% | 78 | 78 | 78 |
| [η], dl/g | 3.1 | 3.1 | 3 |
| Iodine value, g/100g | 5 | 5 | 11 |
| Branching index | 0.4 | 0.4 | 0.97 |
| Amount of oil extension, phr | 0 | 20 | 20 |

Et: Ethoxy group
(1) Composition of copolymer rubber The composition of the copolymer rubber was measured by $^{13}C$-NMR .
(2) Iodine value of copolymer rubber
The iodine value of the copolymer rubber was determined by the titration method.
(3) Intrinsic viscosity [η]
The intrinsic viscosity [η] of the copolymer rubber was measured in decalin at 135°C.
(4) Branching index

The branching index, which is an average branching index (BI), was calculated from the values obtained by the following three experiments.

(i) Weight average molecular weight measured by gel permeation chromatography (GPC) and subsequent low angle light scattering (LALLS) ($MW_{LALLS}$)

It was measured using an LALLS detector connected to a GPC apparatus.

[Measurement conditions]

Apparatus: Waters 150C
Detector: Chromatix KMX-6
Column: Shodex UT-806M (30 cm x 2), UT-807 (30 cm x 1)
Solvent: 1,2,4-trichlorobenzene
Temperature: 135°C
Flow rate: 0.764 ml/min
Concentration: 0.03 to 0.07% (w/v)
Injection amount: 300 μl

(ii) Weight average molecular weight ($Mw_{DRI}$) and viscosity average molecular weight ($Mv_{DRI}$) measured using a differential refractometer (DRI) connected to a GPC apparatus

[Measurement conditions]

Apparatus: Waters 150C
Detector: DRI (built-in in 150C)
Column: Shodex UT-806MLT (50 cm x 1)
Solvent: 1,2,4-trichlorobenzene
Temperature: 135°C
Flow rate: 1 ml/min
Concentration: 0.2% (w/v)
Injection amount: 160 μl

The various molecular weights were calculated in terms of EPDM. The equation for viscosity used in the above

conversion is as follows:

$$\text{Intrinsic viscosity } [\eta] = 2.92 \times 10^{-4}\ Mw^{0.726}$$

(iii) Intrinsic viscosity (IV) measured in decalin at 135°C (= [η])

According to the multiple point method using an Ubbelohde viscometer, viscosity was measured at four concentration-adjusted points, and the relationship between the respective measured points was extrapolated to the concentration of zero.

The measurement values for the above-described (i) and (ii) were obtained by GPC using filtered and diluted solutions of the polymer in 1,2,4-trichlorobenzene.

The average branching index (BI) is defined by the following equation:

$$BI = (Mv_{br} \times Mw_{DRI}) / (Mw_{LALLS} \times Mv_{DRI})$$

wherein $Mv_{br} = k(IV)^{1/a}$, and $Mv_{br}$ is a viscosity average molecular weight of a branched polymer, a is a Mark-Houwink constant, and k is a constant determined from a coefficient K in the Mark-Houwink-Sakurada equation. a is obtained, for example, by referring to a polymer handbook. k is the value determined from $k = (1/K)^{1/a}$ using the coefficient K in the Mark-Houwink-Sakurada equation:

$$[\eta] = KMv^{a}.$$

Here, a and K in the Mark-Houwink-Sakurada equation for EPDM as described in the Polymer Handbook, 4th Edition (published by Wiley-Interscience) are 0.75 and $53.1 \times 10^{3}$ (mL/g), respectively. The values of a and K herein are values obtained in cyclohexane at 40°C. From these values, $k = 5.01 \times 10^{-7}$ was derived and used in the calculation of the BI value in Examples. Also, although the values in cyclohexane at 40°C were used in this case, if the values in different solvents under different conditions are known, they may be also used.

[Comparative Example 1-1]

A rubber composition containing a hexane solvent was obtained by preparing a solution of a copolymer rubber (A-1) prepared by solution polymerization according to Preparative Example A-1 such that the hexane solvent content was 7 parts by weight relative 100 parts by weight of the rubber. This rubber composition was introduced to a twin screw triple-vented extruder to remove the solvent, and the resulting rubber was cut in the pellet form at the front end of the extruder, thus a pellet (A-1-1) of the copolymer rubber (A-1) being obtained.

Upon the above-described kneading, the pellet (A-1-1) of the copolymer rubber (A-1) showed less adhesion between the pellets.

A pellet blocking test was performed with the resulting ethylene copolymer rubber pellet (A-1-1).

(5) Pellet blocking test

Within a frame having a base area of 10 cm x 10 cm and a height of 10 cm, 300 g of the ethylene copolymer rubber pellets (A-1-1) were placed, and a plate of 10 cm x 10 cm and a load (100 g/cm$^2$ together with the plate) were superimposed on the pellets and left to stand at 40°C for 72 hours. Subsequently, the temperature was returned to room temperature, the frame was lifted off, and the property of blocking was evaluated to according to the following criteria.

(Scale)

5: No blocking at all
4: Breaking up easily by fingers into individual pellets

3: Breaking up by fingers into individual pellets but lumps remaining
2: Breaking up into individual pellets by strongly pressing with hand but lumps remaining
1: Close to a bale form

As a result, the pellet (A-1-1) of the ethylene copolymer rubber (A-1) was ranked as 4.

Next, 100 parts by weight of the resulting pellet (A-1-1) of the ethylene copolymer rubber (A-1), 100 parts by weight of carbon black [Asahi Carbon Co., Ltd., tradename: Asahi #60G], 50 parts by weight of a plasticizer [Idemitsu Kosan Co., Ltd., tradename: Diana Process Oil TMPW-90: crosslinking inhibiting ratio = 1%], and 4 parts by weight of the SiH group-containing compound (crosslinking agent) represented by the structural formula (1) [Shin-Etsu Chemical Co., Ltd., tradename: X-93-1346] were kneaded with a Banbury mixer having a capacity of 2.95 liters [Kobe Steel, Ltd.].

$$(CH_3)_3SiO\text{-}[\text{-}SiH(CH_3)\text{-}O\text{-}]_6\text{-}[\text{-}Si(CH_3)\text{-}O\text{-}]_1\text{-}[\text{-}Si(C_6H_6)_2\text{-}O\text{-}]_1\text{-}Si(CH_3)_3 \quad (1)$$

The method of kneading was such that the resulting pellet (A-1-1) of the ethylene copolymer rubber (A-1) was masticated for 30 seconds, and then carbon black, the crosslinking agent and the plasticizer were added, followed by kneading for 2 minutes. Subsequently, the ram was lifted up and cleaned, kneading was further carried out for 1 minute, and a rubber mixture was obtained by discharging at about 130°C. This kneading was carried out at a packing ratio of 75%.

Next, 284 parts by weight of this mixture was wrapped around an 8-inch roll (surface temperature of the front roll: 30°C, surface temperature of the hind roll: 30°C, rotation speed of the front roll: 18 rpm, and rotation speed of the hind roll: 15 rpm), and 0.3 part by weight of 1-ethynyl-1-cyclohexanol as a reaction controlling agent was added, followed by kneading for 10 minutes. As a catalyst, 0.075 part by weight of platinum-1,3,5,7-tetravinyl-1,3,5,7-tetramethylcyclotetrasiloxane complex (1,3,5,7-tetravinyl-1,3,5,7-tetramethylcyclotetrasiloxane complex-IPA solution at a platinum (zero valence) concentration of 2%) [N.E. Chemcat Corp.] was added, followed by kneading for 5 minutes, and the kneaded product was discharged in a ribbon form.

The dispersibility of this ribbon-shaped non-crosslinked rubber composition was measured.

(6) Measurement of dispersibility of non-crosslinked rubber composition

The above-mentioned ribbon-shaped non-crosslinked composition was cut in cross section, and the state of air bubbles on the surface of the cross-section was observed and classified into 5 grades.

5: No bubbles on the cross section
4: A few bubbles seen on the cross section
3: Bubbles seen on the cross section
2: Carbon black and plasticizer separating
1: Impossible to knead

The results are presented in Table 2.

The non-crosslinked rubber composition discharged in a ribbon shape was subjected to extrusion molding at a rate of 4 m/min by extruding using an extruder having a screw with a diameter of 50 mm (Mitsuba Manufacturing Co., Ltd., L/D = 16) at an extruder head temperature of 80°C and using a linear-shaped spinneret of 2 mm in height x 25 mm in width. Crosslinking was carried out for 1 minute using an UHF curing bath (microwave curing bath (Micro Denshi Corp., MCV-60ER-2,) under the condition of a microwave output of 6 kW to obtain a crosslinked product. Here, the rubber temperature at the microwave outlet was 210°C.

The resulting crosslinked product was subjected to the compression set test and the evaluation of crosslinkability in oxygen according to the following methods. The results are presented in Table 2.

(7) Compression set test

According to JIS K6250, the prepared crosslinked sheets were laminated, and a compression set test was carried out with the laminate according to JIS K6262. The testing conditions for the crosslinked rubber were 150°C × 22 hrs.

[Comparative Example 2-1]

Using the copolymer pellet (A-1-1) used in Comparative Example 1-1, the dispersibility of the non-crosslinked rubber, the compression set of the crosslinked rubber and the crosslinkability in oxygen were evaluated in the same manner as in Comparative Example 1-1, except that the SiH group-containing compound (crosslinking agent) [Shin-Etsu Chemical Co., Ltd., tradename: X-93-1346] used in Comparative Example 1-1 was not used, and 2.7 parts by weight of dicumyl peroxide (Mitsui Chemical Co., Ltd., Mitsui DCP) was used instead of the reaction controlling agent (1-ethynyl-1-cyclohexanol) and the catalyst (platinum-1,3,5,7-tetravinyl-1,3,5,7-tetramethylcyclotetrasiloxane complex: 1,3,5,7-tetravinyl-1,3,5,7-tetramethylcyclotetrasiloxane complex-IPA solution at a platinum (zero valence) of 2% [N.E. Chemcat Co., Ltd.). The results are presented in Table 2.

[Example 1-1]

A solution of the copolymer rubber (A-2) prepared by solution polymerization according to Preparative Example A-2 (100 parts by weight of the rubber and 20 parts by weight of a plasticizer [Idemitsu Kosan Co., Ltd., tradename: Diana Process Oil TMPW-380: crosslinking inhibiting rate = 1%]) was prepared such that the hexane solvent content was 7 parts by weight relative to 100 parts by weight of the rubber, to yield 127 parts by weight of a rubber composition containing a hexane solvent.

This rubber composition was introduced to a twin screw triple-vented extruder to remove the solvent, and the resulting rubber was cut into the pellet form at the front end of the extruder, thus a pellet (A-2-1) of the copolymer rubber (A-2) being obtained. The pellet blocking performance of this pellet (A-2-1) was evaluated, and the results are presented in Table 2. The grade was 3, which indicated that the pellet was at a level of being handlable.

Next, using 120 parts by weight of the above-described oil-extended random copolymer pellet (A-2-1) instead of 100 parts by weight of the pellet (A-1-1) of the ethylene/propylene/5-vinyl-2-norbornene random copolymer rubber (A-1) used in Comparative Example 1-1, with the blending presented by Table 2, the dispersibility of the non-crosslinked rubber, the compression set of the crosslinked rubber, and the crosslinkability in oxygen were evaluated in the same manner as in Comparative Example 1-1. The results are presented in Table 2. In view of the dispersibility of the non-crosslinked rubber and the compression set of the crosslinked rubber, it was found that the results were superior to those of Comparative Example 1.

[Example 2-1]

A solution of the copolymer rubber (A-2) prepared by solution polymerization according to Preparative Example A-2 (100 parts by weight of the rubber and 20 parts by weight of a plasticizer [Idemitsu Kosan Co., Ltd., tradename: Diana Process Oil TMPW-380: crosslinking inhibiting rate = 1%]) was prepared such that the hexane solvent content was 7 parts by weight relative to 100 parts by weight of the rubber, to yield 127 parts by weight of a rubber composition containing a hexane solvent.

This rubber composition was introduced to a twin screw triple-vented extruder to remove the solvent, and the resulting rubber was cut into the pellet form at the front end of the extruder, thus a pellet of the copolymer rubber (A-2) being obtained.

Next, 120 parts by weight of thus obtained pellet of the copolymer rubber (A-2) and 20 parts by weight of a pellet of a thermoplastic resin [polypropylene, Mitsui Chemical Co., Ltd., tradename: E121WA] were kneaded with an extruder and granulated to give 140 parts by weight of a pellet (A-2-2) of an ethylene copolymer rubber composition. The pellet blocking performance of this pellet (A-2-2) was evaluated, and the results are presented in Table 2.

Also, using 140 parts by weight of the pellet (A-2-2) of the ethylene copolymer rubber composition obtained in this Example instead of 100 parts by weight of the pellet (A-1-1) of the ethylene copolymer rubber composition used in Comparative Example 1-1, with the blending presented in Table 2, the dispersibility of the non-crosslinked rubber, the compression set of the crosslinked rubber, and the crosslinkability in oxygen were evaluated in the same manner as in Comparative Example 1-1. The results are presented in Table 2.

[Table 2]

| | Comp.Ex. 1 | Comp.Ex. 2 | Example 1 | Example 2 | Comp.Ex. 3 | Comp.Ex. 4 |
|---|---|---|---|---|---|---|
| Copolymer<br>Polymer properties and state<br>Amount of oil extension, phr (B)<br>Thermoplastic resin (PP), phr(C) | A-1<br><br>0<br><br>0 | A-1<br><br>0<br><br>0 | A-2<br><br>20<br><br>0 | A-2<br><br>20<br><br>20 | A-3<br><br>20<br><br>0 | A-1<br><br>0<br><br>0 |
| Copolymer pellet<br>Pellet performance | A-1-1 | A-1-1 | A-2-1 | A-2-2 | A-3-1 | - |

(continued)

| | | | | | | |
|---|---|---|---|---|---|---|
| Blocking property | 4 | 4 | 3 | 5 | 2 | - |
| Crosslinked rubber property evaluation | Comp.Ex. 1-1 | Comp.Ex. 2-1 | Example 1-1 | Example 2-1 | Comp.Ex. 3-1 | Comp.Ex. 4-1 |
| <Blending><br>Copolymer | 100(A-1) | 100(A-1) | 120(A-2) | 140(A-2) | 120(A-3) | 100(A-1) |
| Carbon black [Asahi #60G] | 100 | 100 | 100 | 100 | 100 | 100 |
| Plasticizer[PW-380] | 50 | 50 | 30 | 30 | 30 | 50 |
| Calcium carbonate[Whiton SB] | 30 | 30 | 30 | 30 | 30 | 30 |
| Crosslinking agent *1 | 4 | | 4 | 4 | 4 | 4 |
| Catalyst *2 | 0.2 | | 0.2 | 0.2 | 0.2 | 0.2 |
| Inhibitor *3 | 0.3 | | 0.3 | 0.3 | 0.3 | 0.3 |
| Dicumyl peroxide | | 2.7 | | | | |
| Properties<br>Dispersibility | 3 | 3 | 5 | 5 | 5 | 2 |
| Compression set (150°C x 22 h), % | 18 | 13 | 17 | 18 | 90 | 19 |

*1 SiH group-containing compound (crosslinking agent) represented by the structural formula (1) in the specification [Shin-Etsu Chemical Co., Ltd., tradename: X-93-1346]
*2 0.075 Parts by weight of platinum-1,3,5,7-tetravinyl-1,3,5,7-tetramethylcyclotetrasiloxane complex (1,3,5,7-tetravinyl-1,3,5,7-tetramethylcyclotetrasiloxane complex-IPA solution at a platinum (zero valence) concentration of 2%) [N.E. Chemcat Co., Ltd.]
*3 1-ethynyl-1-cyclohexanol

[Comparative Example 3-1]

A solution of the copolymer rubber (A-3) prepared by solution polymerization according to Preparative Example A-3 (100 parts by weight of the rubber and 20 parts by weight of a plasticizer [Idemitsu Kosan Co., Ltd., tradename: Diana Process Oil TMPW-380: crosslinking inhibitory rate = 1%]) was prepared such that the hexane solvent content was 7 parts by weight relative to 100 parts by weight of the rubber, to yield 127 parts by weight of a rubber composition containing a hexane solvent.

This rubber composition was introduced into a twin screw triple-vented extruder to remove the solvent, and the resulting rubber was cut into the pellet form at the front end of the extruder, thus the pellet (A-3-1) of the copolymer rubber (A-3) being obtained.

The evaluation results for pellet blocking performance of such pellet are presented in Table 2.

120 parts by weight of the pellet (A-3-1) of the above-mentioned copolymer rubber (A-3) was used instead of 120 parts by weight of the pellet (A-2-1) of the ethylene/propylene/5-vinyl-2-norbornene random copolymer rubber (A-2) used in Example 1-1, with the blending presented in Table 2, the dispersibility of the non-crosslinked rubber, the compression set of the crosslinked rubber, and the crosslinkability in oxygen were evaluated in the same manner as in Example 1-1. The results are presented in Table 2.

[Comparative Example 4-1]

The pellet (A-1-1) of the ethylene copolymer rubber (A-1) obtained in Comparative Example 1-1 was pressurized under the conditions of 90°C and 5 MPa to prepare a bale of 10 cm x 10 cm x 10 cm. The dispersibility of the non-crosslinked rubber, the compression set of the crosslinked rubber and the crosslinkability in oxygen were evaluated in the same manner as in Example 1-1, except that 100 parts by weight of this bale was used instead of 100 parts by weight of the pellet of the ethylene copolymer rubber composition obtained in Example 1-1. The results are presented in Table 2.

[Comparative Example 1-2]

After mixing 70 parts by weight of the pellet (A-1-1) of the ethylene copolymer rubber (A-1) obtained in Comparative Example 1-1, 30 parts by weight of the pellet of a polypropylene resin [Melt flow rate (ASDM D 1238, 230°C, 2.16 kg load): 2.0 g/10 min, fraction of isotactic pentad in the portion insoluble in boiling heptane: 0.965, content of the portion insoluble in boiling heptane: 6.8 parts by weight], 0.5 parts by weight of $C_6H_5$-$Si(OSi(CH_3)_2H)_3$, and 0.1 part by weight of 1-ethynyl-1-cyclohexanol homogeneously with a Henschel mixer, the mixture was fed to the feeding port of a twin screw extruder as described below at a rate of 60 kg/h.

Then, a solution of the catalyst (platinum-1,3,5,7-tetravinyl-1,3,5,7-tetramethylcyclotetrasiloxane complex: 1,3,5,7-tetravinyl-1,3,5,7-tetramethylcyclotetrasiloxane complex-IPA solution at a platinum (zero valence) concentration of 2% [N.E. Chemcat Co., Ltd.]) was fed through a liquid-introducing nozzle of the fifth barrel at a rate of 60 g/h, and the plasticizer was fed through a liquid-introducing nozzle of the ninth barrel at a rate of 24 kg/h, to prepare a pellet of an olefin thermoplastic elastomer composition according to the dynamic crosslinking method.

Extruder: twin screw extruder TEM-50A manufactured by Toshiba Machine Co., Ltd., L/D = 44
Set temperature:

B1/B2/B3/B4/B5/B6/B7/B8/B9/B10/B11/B12/D = 140/140/160/160/170/180/200/200/220/220/220/220/220

Screw rotation speed: 300 rpm

Properties of the resulting pellet of the thermoplastic elastomer were evaluated according to the following method. The results are presented in Table 3.

(8) Evaluation of dispersibility of thermoplastic elastomer

The morphology of the pellet cross-section was observed with a microscope, and the results were classified into the following 5 grades:

5: the island phase dispersed in 3 μm or less
4: the island phase dispersed in 3 to 10 μm
3: the island phase dispersed in 10 to 50 μm
2: the island phase dispersed in 50 to 100 μm
1: the island phase dispersed in 100 μm or more

(9) Test for compression set of thermoplastic elastomer

The resulting pellet of the thermoplastic elastomer was molded into 2 mm-sheets at 180°C and then cooled. The resulting sheets were laminated, and the compression set test was carried out therewith according to JIS K6262. The testing conditions were 70°C × 22 hrs.

[Comparative Example 2-2]

Using the same copolymer pellet (A-1-1) as in Comparative Example 1-2, the same procedure as in Comparative Example 1-2 was carried out, except that 0.5 parts by weight of $C_6H_5$-$Si(OSi(CH_3)_2H)_3$ and 0.1 part by weight of 1-ethynyl-1-cyclohexanol of Comparative Example 1-2 were not blended, and instead of feeding a solution of the catalyst (platinum-1,3,5,7-tetravinyl-1,3,5,7-tetramethylcyclotetrasiloxane complex: 1,3,5,7-tetravinyl-1,3,5,7-tetramethylcyclotetrasiloxane complex-IPA solution at a platinum (zero valence) concentration of 2% [N.E. Chemcat Co., Ltd.]) through a liquid-introducing nozzle of the fifth barrel at a rate of 60 g/h, dicumyl peroxide and N',N-m-phenylenebismaleimide were fed at the rates of 120 g/h and 180 g/h, respectively. The dispersibility and the compression set of the resulting thermoplastic elastomer were evaluated. The results are presented in Table 3.

[Example 1-2]

The same procedure as in Comparative Example 1-2 was carried out, except that the above-described copolymer pellet (A-2-1) was used instead of the copolymer pellet (A-1-1) used in Comparative Example 1-2, and the plasticizer [Idemitsu Kosan Co., Ltd., tradename: Diana Process Oil TMPW-380: crosslinking inhibitory ratio = 1%] was introduced through a liquid-introducing nozzle of the ninth barrel at rate of 13.6 kg/h instead of 24 kg/h. The dispersibility and the compression set of the resulting thermoplastic elastomer were evaluated. The results are presented in Table 3. The resulting thermoplastic elastomer had excellent dispersibility and compression set as compared with the elastomer of Comparative Example 1-2.

[Table 3]

| | Comp.Ex.1 | Comp.Ex.2 | Example 1 | Example 2 | Comp.Ex.3 |
|---|---|---|---|---|---|
| Copolymer<br>Polymer properties and state<br>Amount of oil extension, phr (B)<br>Thermoplastic resin (PP), phr (C)<br>Copolymer pellet | A-1<br><br>0<br>0<br>A-1-1 | A-1<br><br>0<br>0<br>A-1-1 | A-2<br><br>20<br>0<br>A-2-1 | A-2<br><br>20<br>20<br>A-2-2 | A-5<br><br>20<br>0<br>A-3-1 |
| Evaluation of thermoplastic elastomer modification performance | Comp.Ex. 1-2 | Comp.Ex. 2-2 | Example 1-2 | Example 2-2 | Comp.Ex. 3-2 |
| <Blending><br>Copolymer<br>PP<br>Plasticizer [PW-380]<br>Crosslinking agent *1<br>Catalyst *2<br>Inhibitor *3 | <br>70(A-1)<br>30<br>40<br>0.5<br>0.1<br>0.1 | <br>70<br>30<br>40 | <br>84(A-2)<br>30<br>26<br>0.5<br>0.1<br>0.1 | <br>98(A-2)<br>16<br>26<br>0.5<br>0.1<br>0.1 | <br>84(A-3)<br>30<br>26<br>0.5<br>0.1<br>0.1 |
| Dicumyl peroxide<br>N',N-m-phenylenebismaleimide | | 0.2<br>0.3 | | | |
| Properties<br>Dispersibility<br>Tensile strength (MPa)<br>Elongation at fracture (%)<br>Compression set (70°C x 22 h), % | <br>3<br>4.2<br>400<br>20 | <br>3<br>5.3<br>380<br>20 | <br>4<br>5.4<br>450<br>19 | <br>5<br>5.8<br>500<br>17 | <br>5<br>5.5<br>450<br>73 |
| *1 SiH group-containing compound (crosslinking agent) represented by the structural formula (1) in the specification [Shin-Etsu Chemical Co., Ltd., tradename X-93-1346]<br>*2 Platinum-1,3,5,7-tetravinyl-1,3,5,7-tetramethylcyclotetrasiloxane complex: 0.075 part by weight of 1,3,5,7-tetravinyl-1,3,5,7-tetramethylcyclotetrasiloxane complex-IPA solution at a platinum (zero valence) concentration of 2% [N.E. Chemcat Co., Ltd.]<br>*3 1-ethynyl-1-cyclohexanol | | | | | |

[Example 2-2]

After mixing 98 parts by weight of the pellet (A-2-2) of the above-mentioned copolymer (A-2), 16 parts by weight of the pellet of a polypropylene resin [melt flow rate (ASDM D 1238, 230°C, 2.16 kg load): 2.0 g/10 min, the isotactic pentad fraction in the portion insoluble in boiling heptane: 0.965, content of the portion insoluble in boiling heptane: 6.8 parts by weight], 0.5 parts by weight of $C_6H_5$-$Si(OSi(CH_3)_2H)_3$ and 0.1 part by weight of 1-ethynyl-1-cyclohexanol homogeneously in a Henschel mixer, the mixture was fed to the feeding port of a twin screw extruder as described below at a rate of 60 kg/h. Then, a solution of the catalyst (platinum-1,3,5,7-tetravinyl-1,3,5,7-tetramethylcyclotetrasiloxane complex: 1,3,5,7-tetravinyl-1,3,5,7-tetramethylcyclotetrasiloxane complex-IPA solution at a platinum (zero valence) concentration of 2% [N.E. Chemcat Co., Ltd.]) was fed through the liquid-introducing nozzle of the fifth barrel at a rate of 60 g/h, and the plasticizer was fed to the liquid-introducing nozzle of the ninth barrel at a rate of 13.6 kg/h, to prepare a pellet of an olefin thermoplastic elastomer composition according to the dynamic crosslinking method. The dispersibility and the compression set of the thermoplastic elastomer were evaluated in the same manner as in Comparative Example 1-2. The results are presented in Table 3.

[Comparative Example 3-2]

The same procedure as in Example 1-2 was carried out, except that 120 parts by weight of the pellet (A-3-1) of a random copolymer rubber (A-3) was used instead of 120 parts by weight of the pellet (A-2-1) of the copolymer rubber (A-2) used in Example 1-2, and The dispersibility and the compression set of the thermoplastic elastomer were evaluated. The results are presented in Table 3.

INDUSTRIAL APPLICABILITY

The pellet according to the present invention which is made of an ethylene/α-olefin/non-conjugated polyene copolymer causes less blocking and excellent crosslinking reactivity, despite containing plasticizer, and thus it is suitably used particularly in the preparation of a thermoplastic elastomer. Further, since the pellet according to the invention has excellent blocking property even though it contains none or only a small amount of the thermoplastic resin component, the degree of freedom in design is high when designing a material using the pellet.

According to the process for preparation of the thermoplastic elastomer of the invention, a thermoplastic elastomer having excellent compression set or dispersibility can be prepared economically and efficiently. In particular, since the elastomer can be prepared continuously using a twin screw extruder, the process is excellent from an industrial viewpoint.

According to the process for preparation of the pellet of the ethylene copolymer rubber composition according to the invention, a copolymer pellet which has low degree of crystallinity, does not cause blocking and has carbon-carbon double bonds of excellent crosslinking reactivity, can be obtained.

## Claims

1. A process for preparing a thermoplastic elastomer by dynamic cross-linking of a pellet of ethylene/α-olefin/non-conjugated polyene copolymer oil-extended by a plasticizer (B) which process comprises

    (a) producing pellets of an oil-extended copolymer by introducing a rubber composition comprising:

        (A) 100 parts by weight of an ethylene/α-olefin/non-conjugated polyene copolymer (A) containing a constitutional unit derived from non-conjugated polyene represented by Formula [I] or [II], and having a branching index of 0.3 to 0.95, and

        (B) 1 to 150 parts by weight of a plasticizer (B) relative to 100 parts by weight of the above (A), into a multivented extruder via the feed section of the extruder, kneading the rubber composition and forming pellets thereof,

    and (b) dynamically cross-linking the pellets:

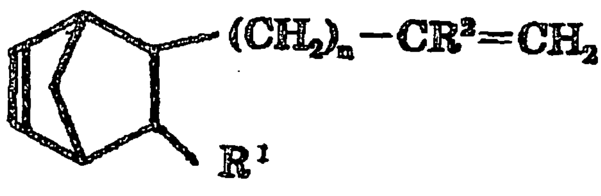

... [I]

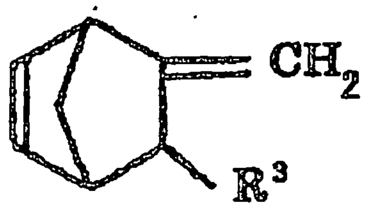 ... [II]

in Formula [I], n is an integer of 0 to 10; $R^1$ is a hydrogen atom or an alkyl group having 1 to 10 carbon atoms; and $R^2$ is a hydrogen atom or an alkyl group having 1 to 5 carbon atoms; and in Formula [II], $R^3$ is a hydrogen atom or an alkyl group having 1 to 10 carbon atoms.

**2.** A process according to claim 1 wherein the ethylene/α-olefin/non-conjugated polyene copolymer (A) satisfies the following conditions (i) and (ii):

(i) the intrinsic viscosity [η] (in decalin at 135°C) is from 1 to 10 dl/g; and
(ii) the molar ratio of ethylene/α-olefin is from 50/50 to 98/2.

**3.** A process according to claim 1 or claim 2 wherein the iodine value of the ethylene/α-olefin/non-conjugated polyene copolymer (A) is from 0.5 to 50 g/100 g.

**4.** A process according to any one of claims 1 to 3 wherein the pellets formed in step (a) satisfy the following conditions (iii) and (iv):

(iii) $-30([\eta] - 2) \leq 3 \times$ (ethylene/α-olefin ratio); and
(iv) $[\eta] - 1 \geq 0.05 \times$ (blending ratio for the plasticizer (% by weight)) [wherein the blending ratio for the plasticizer (% by weight) denotes the ratio of the weight of the plasticizer (B) relative to the sum of the weight of the ethylene/α-olefin/non-conjugated polyene copolymer (A) and the weight of the plasticizer (B) in the pellet of the invention, as expressed in percentage].

**5.** A process according to any one of claims 1 to 4 wherein the rubber composition further comprises up to 30 parts by weight, per 100 parts by weight of the copolymer (A), of a thermoplastic resin (C).

**6.** A process according to any one of claims 1 to 4 wherein the rubber composition comprises an amount (C3) of the thermoplastic resin (C) and wherein an additional amount (C4) of the thermoplastic resin (C) is introduced into the extruder in the presence of an inert gas via another feed section, the total amount of the thermoplastic resins (C3) and (C4) being up to 30 parts by weight per 100 parts by weight of the copolymer (A).

**7.** A process according to any one of claims 1 to 4 wherein the rubber composition contains no thermoplastic resin.

**8.** A process according to any one of claims 1 to 7 wherein the rubber composition further comprises up to 10 parts by weight of an organic solvent and wherein the rubber composition is subjected to solvent removal.

**9.** A process according to any one of claims 1 to 8 wherein dynamic cross-linking is carried out by supplying continuously the pellets to a melt kneading machine.

**10.** A process according to claim 9, wherein the melt kneading machine is an extruder.

**11.** Pellets of an oil-extended ethylene/α-olefin/non-conjugated polyene copolymer consisting of

(i) 100 parts by weight of an ethylene/α-olefin/non-conjugated polyene copolymer (A) as defined in claim 1 and
(ii) 1 to 150 parts by weight, per 100 parts by weight of the copolymer (A), of a plasticizer and optionally
(iii) up to 30 parts by weight, per 100 parts by weight of the copolymer (A) of a thermoplastic resin (C), obtainable by the process step (a) of claim 1.

**12.** Pellets according to claim 11 containing no thermoplastic resin.

**13.** Pellets according to claim 11 or claim 12 wherein the copolymer (A) satisfies conditions (i) and (ii):

(i) the intrinsic viscosity [η] (in decalin at 135°C) is from 1 to 10 dl/g; and
(ii) the molar ratio of ethylene/α-olefin is from 50/50 to 98/2.

**14.** Pellets according to any one of claims 11 to 13 wherein the iodine value of the ethylene/α-olefin/non-conjugated polyene copolymer (A) is from 0.5 to 50 g/100 g.

**15.** Pellets according to any one of claims 11 to 14 wherein the pellets satisfy the following conditions (iii) and (iv):

(iii) -30([η] - 2) ≤ 3 x (ethylene/α-olefin ratio); and
(iv) [η] - 1 ≥ 0.05 x (blending ratio for the plasticizer (% by weight)) [wherein the blending ratio for the plasticizer (% by weight) denotes the ratio of the weight of the plasticizer (B) relative to the sum of the weight of the ethylene/α-olefin/non-conjugated polyene copolymer (A) and the weight of the plasticizer (B) in the pellet of the invention, as expressed in percentage].

**Patentansprüche**

**1.** Verfahren zur Herstellung eines thermoplastischen Elastomers durch dynamisches Vernetzen eines Pellets von Ethylen/α-Olefin/nicht-konjugiertes Polyen-Copolymer, welches durch einen Weichmacher (B) ölverstreckt ist, wobei das Verfahren umfasst:

(a) Herstellen von Pellets eines ölverstreckten Copolymers durch Einspeisen einer Kautschukzusammensetzung, umfassend:

(A) 100 Gewichtsteile eines Ethylen/α-Olefin/nicht-konjugiertes Polyen-Copolymers (A), welches eine konstitutionelle Einheit, welche von einem durch Formel [I] oder [II] repräsentierten nicht-konjugierten Polyen abgeleitet ist, enthält und einen Verzweigungsindex von 0,3 bis 0,95 aufweist, und
(B) 1 bis 150 Gewichtsteile eines Weichmachers (B) bezogen auf 100 Gewichtsteile des obigen (A),

in einen Mehrfachentgasungsextruder über den Einfüllabschnitt des Extruders, Kneten der Kautschukzusammensetzung und Formen von Pellets daraus,
und (b) dynamisches Vernetzen der Pellets:

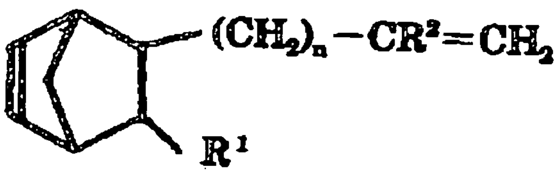

··· [I]

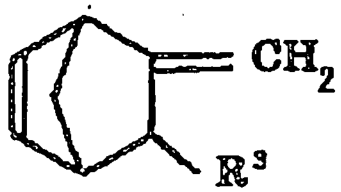

··· [II]

wobei in Formel [I] n eine ganze Zahl von 0 bis 10 ist; $R^1$ ein Wasserstoffatom oder eine Alkylgruppe mit 1 bis 10 Kohlenstoffatomen ist; und $R^2$ ein Wasserstoffatom oder eine Alkylgruppe mit 1 bis 5 Kohlenstoffatomen ist; und in Formel [II] $R^3$ ein Wasserstoffatom oder eine Alkylgruppe mit 1 bis 10 Kohlenstoffatomen ist.

**2.** Verfahren nach Anspruch 1, wobei das Ethylen/α-Olefin/nicht-konjugiertes Polyen-Copolymer (A) die folgenden Bedingungen (i) und (ii) erfüllt:

(i) die Grenzviskosität [η] (in Decalin bei 135°C) beträgt 1 bis 10 dl/g; und
(ii) das Molverhältnis von Ethylen/α-Olefin beträgt 50/50 bis 98/2.

**3.** Verfahren nach Anspruch 1 oder Anspruch 2, wobei die Iodzahl des Ethylen/α-Olefin/nicht-konjugiertes Polyen-Copolymers (A) 0,5 bis 50 g/100 g beträgt.

**4.** Verfahren nach einem der Ansprüche 1 bis 3, wobei die in Schritt (a) hergestellten Pellets die folgenden Bedingungen (iii) und (iv) erfüllen:

(iii) -30([η] - 2) ≤ 3 x (Ethylen/α-Olefin-Verhältnis); und
(iv) [η] - 1 ≥ 0,05 x (Mischverhältnis für den Weichmacher (Gew.-%)) [wobei das Mischverhältnis für den Weichmacher (Gew.-%) das Verhältnis des Gewichts des Weichmachers (B) bezogen auf die Summe des Gewichts des Ethylen/α-Olefin/nichtkonjugiertes Polyen-Copolymers (A) und des Gewichts des Weichmachers (B) in dem Pellet der Erfindung, ausgedrückt als Prozentsatz, bezeichnet].

**5.** Verfahren nach einem der Ansprüche 1 bis 4, wobei die Kautschukzusammensetzung des Weiteren bis zu 30 Gewichtsteile eines thermoplastischen Harzes (C) pro 100 Gewichtsteile des Copolymers (A) umfasst.

**6.** Verfahren nach einem der Ansprüche 1 bis 4, wobei die Kautschukzusammensetzung eine Menge (C3) von dem thermoplastischen Harz (C) umfasst und wobei eine zusätzliche Menge (C4) von dem thermoplastischen Harz (C) in den Extruder in Gegenwart eines inerten Gases über einen anderen Einfüllabschnitt eingespeist wird, wobei die Gesamtmenge der thermoplastischen Harze (C3) und (C4) bis zu 30 Gewichtsteile pro 100 Gewichtsteile des Copolymers (A) beträgt.

**7.** Verfahren nach einem der Ansprüche 1 bis 4, wobei die Kautschukzusammensetzung kein thermoplastisches Harz enthält.

**8.** Verfahren nach einem der Ansprüche 1 bis 7, wobei die Kautschukzusammensetzung des Weiteren bis zu 10 Gewichtsteile eines organischen Lösemittels umfasst und wobei die Kautschukzusammensetzung einer Lösemittel-Entfernung unterworfen wird.

**9.** Verfahren nach einem der Ansprüche 1 bis 8, wobei das dynamische Vernetzen ausgeführt wird, indem die Pellets kontinuierlich einer Schmelzknetmaschine zugeführt werden.

**10.** Verfahren nach Anspruch 9, wobei die Schmelzknetmaschine ein Extruder ist.

**11.** Pellets eines ölverstreckten Ethylen/α-Olefin/nicht-konjugiertes Polyen-Copolymers, bestehend aus:

(i) 100 Gewichtsteilen eines Ethylen/α-Olefin/nicht-konjugiertes Polyen-Copolymers (A), wie in Anspruch 1 definiert, und
(ii) 1 bis 150 Gewichtsteilen eines Weichmachers pro 100 Gewichtsteile des Copolymers (A) und gegebenenfalls
(iii) bis zu 30 Gewichtsteilen eines thermoplastischen Harzes (C) pro 100 Gewichtsteile des Copolymers (A),

welche durch den Verfahrensschritt (a) von Anspruch 1 erhältlich sind.

**12.** Pellets nach Anspruch 11, die kein thermoplastisches Harz enthalten.

**13.** Pellets nach Anspruch 11 oder Anspruch 12, wobei das Copolymer (A) die Bedingungen (i) und (ii) erfüllt:

(i) die Grenzviskosität [η] (in Decalin bei 135°C) beträgt 1 bis 10 dl/g; und
(ii) das Molverhältnis von Ethylen/α-Olefin beträgt 50/50 bis 98/2.

**14.** Pellets nach einem der Ansprüche 11 bis 13, wobei die Iodzahl des Ethylen/α-Olefin/nicht-konjugiertes Polyen-Copolymers (A) 0,5 bis 50 g/100 g beträgt.

**15.** Pellets nach einem der Ansprüche 11 bis 14, wobei die Pellets die folgenden Bedingungen (iii) und (iv) erfüllen:

(iii) $-30([\eta] - 2) \leq 3 \times$ (Ethylen/α-Olefin-Verhältnis); und
(iv) $[\eta] - 1 \leq 0{,}05 \times$ (Mischverhältnis für den Weichmacher (Gew.-%)) [wobei das Mischverhältnis für den Weichmacher (Gew.-%) das Verhältnis des Gewichts des Weichmachers (B) bezogen auf die Summe des Gewichts des Ethylen/α-Olefin/nichtkonjugiertes Polyen-Copolymers (A) und des Gewichts des Weichmachers (B) in dem Pellet der Erfindung, ausgedrückt als Prozentsatz, bezeichnet].

## Revendications

**1.** Procédé de production d'un élastomère thermoplastique par réticulation dynamique de pastilles de copolymère d'éthylène, d'α-oléfine et de polyène non-conjugué, en dilution huileuse dans un plastifiant (B), lequel procédé comporte les étapes suivantes :

a) préparer des pastilles de copolymère en dilution huileuse, en introduisant une composition de caoutchouc, comprenant :

A) 100 parties en poids d'un copolymère (A) d'éthylène, d'α-oléfine et de polyène non-conjugué, qui comporte des motifs constitutifs dérivés d'un polyène non-conjugué représenté par la formule (I) ou (II) et dont l'indice de ramification vaut de 0,3 à 0,95,
B) et 1 à 150 parties en poids d'un plastifiant (B), pour les 100 parties en poids du composant (A) indiqué ci-dessus,

dans une extrudeuse dotée de plusieurs évents, par la section d'alimentation de l'extrudeuse, en malaxant cette composition de caoutchouc, et en en faisant des pastilles,
b) et opérer une réticulation dynamique de ces pastilles ;

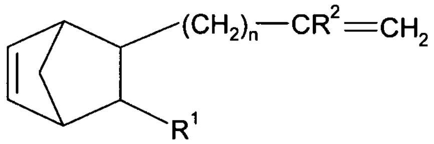

(I)

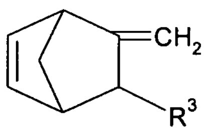

(II)

dans la formule (I), l'indice n est un nombre entier valant de 0 à 10,
$R^1$ représente un atome d'hydrogène ou un groupe alkyle comportant 1 à 10 atomes de carbone et $R^2$ représente un atome d'hydrogène ou un groupe alkyle comportant 1 à 5 atomes de carbone, et dans la formule (II),
$R^3$ représente un atome d'hydrogène ou un groupe alkyle comportant 1 à 10 atomes de carbone.

**2.** Procédé conforme à la revendication 1, dans lequel le copolymère (A) d'éthylène, d'α-oléfine et de polyène non-conjugué obéit aux conditions (i) et (ii) suivantes :

i) sa viscosité intrinsèque [η], mesurée dans de la décaline à 135 °C, vaut de 1 à 10 dL/g,
ii) et le rapport molaire éthylène/α-oléfine vaut de 50/50 à 98/2.

**3.** Procédé conforme à la revendication 1 ou 2, dans lequel le copolymère (A) d'éthylène, d'α-oléfine et de polyène non-conjugué présente un indice d'iode valant de 0,5 à 50 g/100 g.

4. Procédé conforme à l'une des revendications 1 à 3, dans lequel les pastilles préparées dans l'étape (a) obéissent aux conditions (iii) et (iv) suivantes :

iii) $-30([\eta] - 2) \leq 3$ x (rapport éthylène/$\alpha$-oléfine)
iv) $[\eta] - 1 \geq 0{,}05$ x (rapport de mélange du plastifiant, en % en poids) ce rapport de mélange du plastifiant, en % en poids, étant le rapport, exprimé en pourcentage, du poids de plastifiant (B) au total du poids de copolymère (A) d'éthylène, d'$\alpha$-oléfine et de polyène non-conjugué et du poids de plastifiant (B), dans lesdites pastilles.

5. Procédé conforme à l'une des revendications 1 à 4, dans lequel la composition de caoutchouc comprend en outre jusqu'à 30 parties en poids, pour 100 parties en poids du copolymère (A), d'une résine thermoplastique (C).

6. Procédé conforme à l'une des revendications 1 à 4, dans lequel la composition de caoutchouc comprend une résine thermoplastique (C) en une certaine quantité (C3), et dans lequel on introduit dans l'extrudeuse une quantité supplémentaire (C4) de cette résine thermoplastique (C), en présence d'un gaz inerte et par une autre section d'alimentation, le total de ces quantités (C3) et (C4) de résine thermoplastique valant jusqu'à 30 parties en poids pour 100 parties en poids du copolymère (A).

7. Procédé conforme à l'une des revendications 1 à 4, dans lequel la composition de caoutchouc ne contient pas de résine thermoplastique.

8. Procédé conforme à l'une des revendications 1 à 7, dans lequel la composition de caoutchouc contient en outre jusqu'à 10 parties en poids d'un solvant organique, et la composition de caoutchouc subit une opération d'élimination du solvant.

9. Procédé conforme à l'une des revendications 1 à 8, dans lequel on effectue l'opération de réticulation dynamique en introduisant les pastilles en continu dans une machine de malaxage à l'état fondu.

10. Procédé conforme à la revendication 9, dans lequel la machine de malaxage à l'état fondu est une extrudeuse.

11. Pastilles de copolymère d'éthylène, d'$\alpha$-oléfine et de polyène non-conjugué en dilution huileuse, constituées :

i) de 100 parties en poids d'un copolymère (A) d'éthylène, d'$\alpha$-oléfine et de polyène non-conjugué, du type défini dans la revendication 1,
ii) et de 1 à 150 parties en poids, pour 100 parties en poids de copolymère (A), d'un plastifiant (B),
et en option,
iii) de jusqu'à 30 parties en poids, pour 100 parties en poids de copolymère (A), d'une résine thermoplastique (C),

et accessibles par l'étape (a) d'un procédé conforme à la revendication 1.

12. Pastilles conformes à la revendication 11, qui ne contiennent pas de résine thermoplastique.

13. Pastilles conformes à la revendication 11 ou 12, dans lesquelles le copolymère (A) obéit aux conditions (i) et (ii) suivantes :

i) sa viscosité intrinsèque $[\eta]$, mesurée dans de la décaline à 135 °C, vaut de 1 à 10 dL/g,
ii) et le rapport molaire éthylène/$\alpha$-oléfine vaut de 50/50 à 98/2.

14. Pastilles conformes à l'une des revendications 11 à 13, dans lesquelles le copolymère (A) d'éthylène, d'$\alpha$-oléfine et de polyène non-conjugué présente un indice d'iode valant de 0,5 à 50 g/100 g.

15. pastilles conformes à l'une des revendications 11 à 14, lesquelles pastilles obéissent aux conditions (iii) et (iv) suivantes :

iii) $-30([\eta] - 2) \leq 3$ x (rapport éthylène/$\alpha$-oléfine)
iv) $[\eta] - 1 \leq 0{,}05$ x (rapport de mélange du plastifiant, en % en poids) ce rapport de mélange du plastifiant, en % en poids, étant le rapport, exprimé en pourcentage, du poids de plastifiant (B) au total du poids de copolymère (A) d'éthylène, d'$\alpha$-oléfine et de polyène non-conjugué et du poids de plastifiant (B), dans lesdites pastilles.

Fig.1

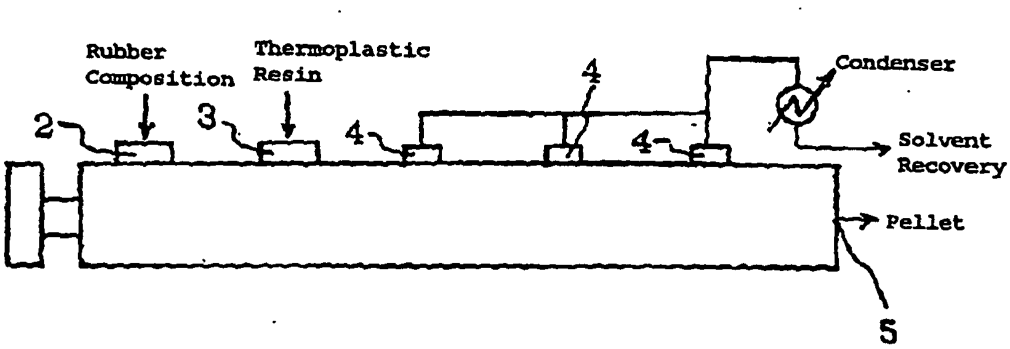
Rubber
Composition
Thermoplastic
Resin
Condenser
2
3
4
4
4
Solvent
Recovery
Pellet
5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61061810 A
- JP 9040586 A
- US 2970150 A
- US 2823218 A
- US 3159601 A
- US 159662 A
- US 3516946 A
- US 3775452 A
- US 3814780 A
- JP 10120838 A
- JP 11335501 A

### Non-patent literature cited in the description

- **MEANWHILE.** Pap Meet Rubber Div. Am Chem Soc, 2000, vol. 157, 36
- vulcanized rubber. *ISO,* 1996, vol. 1392, 373
- **KOJI SAEKI ; SHINZO OMI.** *New Polymer Preparation Process,* 1996
- Polymer Handbook. Wiley-Interscience